# EUROPÄISCHE PATENTSCHRIFT

(11) **EP 3 821 295 B1**
(45) Veröffentlichungstag und Bekanntmachung des Hinweises auf die Patenterteilung: **09.08.2023**
(21) Anmeldenummer: 19739606.2
(22) Anmeldetag: 12.07.2019
(51) Int. Cl.: G02F 1/1503, G02F 1/155

(54) **VORRICHTUNG ZUM BEREICHSWEISEN ÄNDERN EINER OPTISCHEN EIGENSCHAFT UND VERFAHREN ZUM BEREITSTELLEN DERSELBEN**
DEVICE FOR CHANGING AN OPTICAL PROPERTY IN AREAS AND METHOD FOR PROVIDING THE SAME
DISPOSITIF POUR LA MODIFICATION PAR ZONES D'UNE PROPRIÉTÉ OPTIQUE ET PROCÉDÉ POUR SA PRÉPARATION

(30) Priorität: 13.07.2018 DE 102018211715
(43) Veröffentlichungstag der Anmeldung: 19.05.2021
(73) Patentinhaber: Technische Universität Kaiserslautern, 67663 Kaiserslautern (DE)
(72) Erfinder: OESTERSCHULZE, Egbert, 67663 Kaiserslautern (DE); KORTZ, Carsten, 67697 Otterberg (DE)
(74) Vertreter: König, Andreas Rudolf
(86) Internationale Anmeldenummer: PCT/EP2019/068891
(87) Internationale Veröffentlichungsnummer: WO 2020/012016

(56) Entgegenhaltungen:
- JP-A- 2003 315 869
- JP-A- 2012 128 457
- US-B1- 9 759 984
- HEIN A ET AL: "Electrochromic tunable filters based on nanotubes with viologen incorporation", PROCEEDINGS OF SPIE; [PROCEEDINGS OF SPIE ISSN 0277-786X VOLUME 10524], SPIE, US, Bd. 10679, 24. Mai 2018 (2018-05-24), Seiten 106791U-106791U, XP060109078, DOI: 10.1117/12.2307158 ISBN: 978-1-5106-1533-5
- WANG MIN-CHUAN ET AL: "All-solid-state electrochromic thin films for optical iris application", 2015 22ND INTERNATIONAL WORKSHOP ON ACTIVE-MATRIX FLATPANEL DISPLAYS AND DEVICES (AM-FPD), JSAP, 1. Juli 2015 (2015-07-01), Seiten 159-160, XP033185644, DOI: 10.1109/AM-FPD.2015.7173230

## Beschreibung

Die vorliegende Erfindung bezieht sich auf eine Vorrichtung zum bereichsweisen Ändern einer optische Eigenschaft und auf ein Verfahren zum Bereitstellen derselben. Die vorliegende Erfindung bezieht sich ferner auf eine segmentweise vollflächig und lückenlos schaltbare elektrochrome Iris.

Iriden sind Bauteile, die zur Kontrolle der Schärfentiefe, des Sehfeldes und der übertragbaren Intensität nutzbar sind. In modernen Geräten wie Smartphones, Laptops und dergleichen werden inzwischen nicht-mechanische Mikro-Iriden gefordert, die ein sehr geringes Einbauvolumen und zusätzlich in Hinsicht auf die Aktorik eine geringe elektrische Betriebsspannung und eine geringe Leistungsaufnahme aufweisen. Solche Iriden können auf Basis des elektrochromen Effekts realisiert werden.

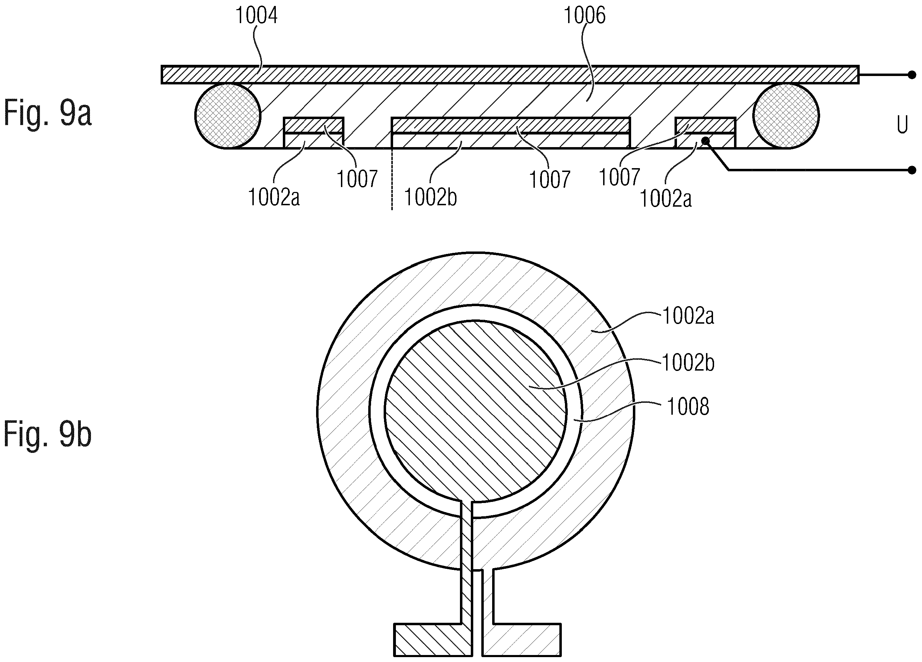

Bei einer elektrochromen Iris handelt es sich um eine elektrochemische Zelle, die im Querschnitt in Fig. 9a und in einer Aufsicht in Fig. 9b dargestellt ist. Eine derartige Zelle besteht aus zwei sich gegenüberliegenden transparenten leitfähigen Schichten 1002 und 1004. Die Schichten 1002 und/oder 1004 können dabei als TCO-Schicht (TCO = Transparent Conductive Oxide; transparentes leitfähiges Oxid; transparent elektrisch leitfähige Elektrode) gebildet sein. Auf einer der TCO-Schichten oder auf beiden Schichten befindet sich eine Nanopartikelschicht (NPS) 1007, aus materialtechnischen Gründen werden hier oftmals TiO₂- oder ATO- (Antimon dotiertes Zinnoxid) Nanopartikel verwendet. An die Nanopartikel wird das elektrochrome Molekül, etwa Viologenderivate an der Oberfläche gebunden. Nanopartikel werden eingesetzt, um die nutzbare Oberfläche für die Anbindung der elektrochromen Moleküle massiv zu erhöhen. Zwischen den Elektroden 1002 und 1004 befindet sich ein Elektrolyt 1006. Sobald eine Potentialdifferenz U zwischen den beiden Elektroden 1002 und 1004 angelegt wird, reagieren je nach Höhe/Vorzeichen der Potentialdifferenz U die elektrochromen Moleküle durch Färbung bzw. Entfärbung.

Fig. 9b zeigt einen transparenten Zustand, in welchem die getrennt voneinander steuerbaren Bereiche 1002a und 1002b verdeutlicht sind.

Für die Realisierung der elektrochromen Iris mit mehreren Blendenstufen, d. h. den Bereichen 1002a und 1002b, mussten bisher sowohl die TCO-Schicht 1002 als auch die NPS-Schicht 1007 so strukturiert werden, dass von außen einzeln ansteuerbare koaxiale, ringförmige Elektroden entstehen, siehe die Bereiche 1002a und 1002b in Fig. 9b. Jeder Ring kann somit individuell ein- oder ausgeschaltet werden oder auch in seiner Absorption individuell, d. h. analog angepasst werden.

Es ist jedoch schwierig, die NPS-Schicht auf einer Skala von wenigen zehn Mikrometern zu strukturieren, um die Irisblendenstufen definieren zu können. Da bei TiO₂-Nanopartikeln eine katalytische Wirkung auftritt, wenn zusätzlich ultraviolettes (UV)-Licht angeboten wird, werden organische Verbindungen in Kontakt mit den Nanopartikeln zersetzt. Somit fallen die weitverbreiteten UV-Lithographietechniken zur Strukturierung mit einem UVempfindlichen organischen Photolack vollständig aus. Die Mikrostrukturierung auf einer Skala von wenigen Mikrometern ist damit nicht möglich, da bisherige Techniken wie Rakeln oder Drucken nur Strukturen auf deutlich größeren räumlichen Skalen zu erzeugen erlauben. Die Laserablation erweist sich ebenfalls als schwierig, da bei der Ablation die Oberfläche des Substrats geschädigt werden kann und somit seine optische Qualität vermindert wird.

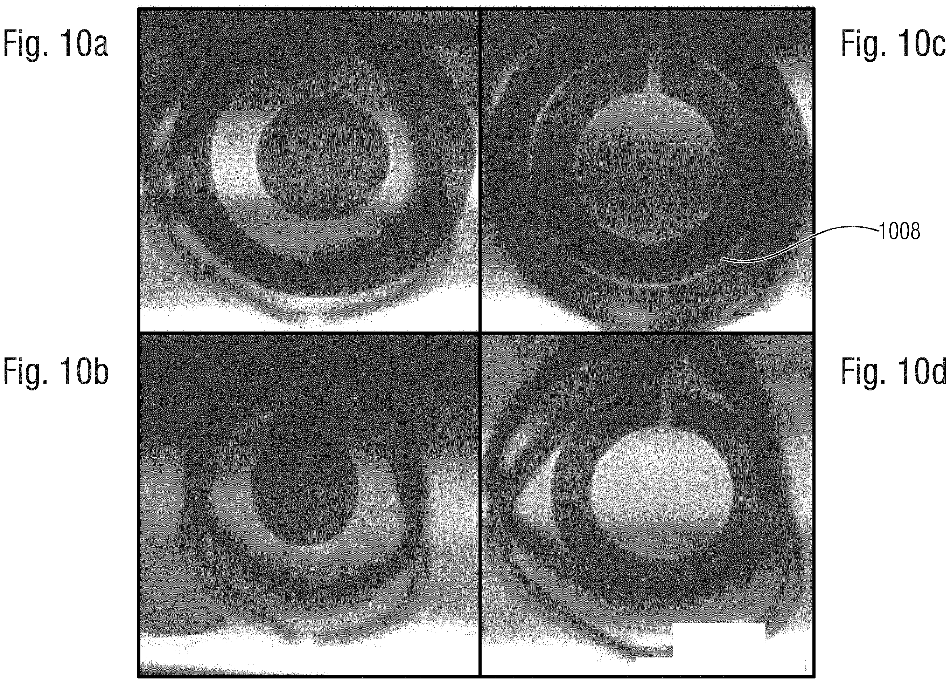

Zwischen den ringförmigen Blendenstufen entstehen spaltförmige Öffnungen, die nicht geschaltet werden können, sondern optisch immer transparent sind. Dies ist in Fig. 9b als Bereich 1008 dargestellt. Die Fig. 10a bis 10d zeigen Photographien verschiedener Schaltzustände einer dreistufigen Iris gemäß dem Stand der Technik, wobei in Fig. 10c der Spalt 1008 deutlich hervortritt. Derartige Spalte sind schädlich für die optische Wirkung der Iris, z. B. bei der Kontrolle der Schärfentiefe, die über die Blendengröße einstellbar sein soll.

US 9759984 B1 offenbart eine elektrochrome Iris, die alle Merkmale des Oberbegriffs von Anspruch 1 aufweist.

JP 2012-128457 A offenbart eine Vorrichtung zum bereichsweisen Ändern einer optischen Eigenschaft mit einem Flüssigkristall als aktivem Material.

Hein et al. beschreiben in "Electrochromic tunable filters based on nanotubes with viologen incorporation" (Proceedings of Spie, Bd. 10679, Seiten 106791U1 - 106791U6) elektrochrome Vorrichtungen mit einer TiO₂-Elektrode, die durch elektrochemische Anodisierung erhalten wird.

JP 2003 315869 A bezieht sich auf eine Bereitstellung einer EC-Blendeneinheit, die für die Blendeneinheit usw. eines Fotografiergeräts wie einer Kamera geeignet ist.

Wünschenswert wären deshalb Iriden, die eine hohe optische Qualität aufweisen.

Eine Aufgabe der vorliegenden Erfindung besteht deshalb darin, Vorrichtungen mit einer hohen Qualität zu schaffen.

Diese Aufgabe wird durch den Gegenstand der unabhängigen Patentansprüche 1 und 14 gelöst.

Die Erfinder haben erkannt, dass durch Einbringung eines aktiven Materials in Bereiche zwischen strukturierte Teilbereiche der strukturierten Elektrode über den während des Betriebs dort auftretenden Potentialabfall gleichzeitig sowohl eine getrennte Ansteuerung der einzelnen Teilbereiche/Segmente möglich ist, bei gleicher Ansteuerung jedoch die Ausbildung der optisch störenden Spalte vermieden werden kann, so dass eine hohe Qualität der Vorrichtung erhalten wird. Es wird ermöglicht, Spalte zwischen den einzelnen Bereichen zu vermeiden bzw. räumlich vollständig schaltbare Vorrichtungen zu schaffen.

Die vorliegende Erfindung umfasst eine Vorrichtung zum bereichsweisen Ändern einer optischen Eigenschaft eine Gegenelektrode und eine Arbeitselektrode. Die Arbeitselektrode weist eine Strukturierung in zumindest einen ersten Elektrodenbereich und einen zweiten Elektrodenbereich auf, wobei zwischen dem ersten Elektrodenbereich und dem zweiten Elektrodenbereich ein Zwischenbereich angeordnet ist. Die Vorrichtung umfasst ein aktives Material, das zwischen der Gegenelektrode und der Arbeitselektrode angeordnet ist, und das ausgebildet ist, um basierend auf einer elektrischen Potentialdifferenz zwischen der Gegenelektrode und der Arbeitselektrode, die optische Eigenschaft zu verändern. Das aktive Material bildet eine zusammenhängende Schicht, die zumindest einen Teilbereich des ersten Elektrodenbereichs und einen Teilbereich des zweiten Elektrodenbereichs bedeckt und in dem Zwischenbereich angeordnet ist. Die Anordnung des aktiven Materials in dem Zwischenbereich ermöglicht den Erhalt und/oder die Einstellung der veränderlichen optischen Eigenschaft auch in dem Zwischenbereich und so die Vermeidung der optisch störenden Spalte, womit eine hohe optische Qualität erhalten wird.

Gemäß einem Ausführungsbeispiel ist das aktive Material mit einer veränderlichen Materialdicke durchgehend über den ersten Elektrodenbereich, den Zwischenbereich und den zweiten Elektrodenbereich angeordnet. Dies ermöglicht eine einfache Anordnung des aktiven Materials.

Gemäß einem Ausführungsbeispiel weist das aktive Material in dem Zwischenbereich eine größere Materialdicke auf, als in dem ersten und zweiten Elektrodenbereich. Dies ermöglicht eine einfache Anordnung eines möglicherweise viskosen Materials, aus dem das aktive Material erhalten wird, so dass das aktive Material Spalte zwischen den Elektrodenteilbereichen ausfüllen kann.

Gemäß einem Ausführungsbeispiel umfasst das aktive Material Nanopartikel (mit möglicherweise elektrochromen Eigenschaften) und eine Vielzahl von elektrochromen Molekülen, die an den Nanopartikeln anhaften. Dies ermöglicht den Erhalt eines hohen Maßes an Absorption, da eine hohe Anzahl von elektrochromen Molekülen an der durch die Nanopartikel groß ausgestalteten Oberfläche anhaften kann.

Gemäß einem Ausführungsbeispiel umfasst die Vorrichtung einen Elektrolyten, der zwischen dem aktiven Material auf der Arbeitselektrode und der Gegenelektrode angeordnet ist. Der Elektrolyt kann Kontakt zum aktiven Material aufweisen und einen elektrischen Kontakt zwischen zumindest einer der Elektroden und dem aktiven Material bereitstellen.

Gemäß der vorliegenden Erfindung ist das aktive Material elektrisch leitfähig. Das aktive Material ist ausgebildet, um bei einer ersten Potentialdifferenz (elektrische Spannung) zwischen dem ersten Elektrodenbereich der Arbeitselektrode und der Gegenelektrode und einer zweiten Potentialdifferenz zwischen dem zweiten Elektrodenbereich der Arbeitselektrode und der Gegenelektrode einen Übergangsbereich auszubilden, in welchem die optische Eigenschaft von einem ersten optischen Zustand, etwa einem ersten Absorptionszustand in einen zweiten optischen Zustand, etwa einem zweiten Absorptionszustand wechselt. Das bedeutet, der Zustandswechsel, absorbierend/transparent bzw. transparent/absorbierend und/oder bezogen auf eine Phasenänderung oder Lichtemission findet innerhalb des aktiven Materials statt. Dies ermöglicht einen kontinuierlichen Übergang zwischen den optischen Zuständen über eine Strecke vom ersten Elektrodenbereich hin zum zweiten Elektrodenbereich.

Gemäß einem Ausführungsbeispiel ist das aktive Material ausgebildet, um bei einer gleichen ersten elektrischen Potentialdifferenz zwischen dem ersten Elektrodenbereich und der Gegenelektrode einerseits und zwischen dem zweiten Elektrodenbereich und der Gegenelektrode andererseits eine homogene erste optische Eigenschaft über den ersten Teilbereich, den Zwischenbereich und den zweiten Teilbereich hinweg aufzuweisen. Bei einer gleichen zweiten elektrischen Potentialdifferenz zwischen dem ersten Elektrodenbereich und der Gegenelektrode einerseits und zwischen dem zweiten Elektrodenbereich und der Gegenelektrode andererseits weist das aktive Material eine homogene zweite optische Eigenschaft über den ersten Teilbereich, den Zwischenbereich und den zweiten Teilbereich hinweg auf. Das aktive Material kann somit gleichzeitig im Zwischenbereich, dem ersten Elektrodenbereich und dem zweiten Elektrodenbereich geschaltet werden, was das Auftreten der optisch störenden Spalte verhindert.

Gemäß einem Ausführungsbeispiel ist die Arbeitselektrode und/oder die Gegenelektrode so gebildet, dass sie transparent elektrisch leitfähig gebildet ist. Dies ermöglicht den Erhalt einer Vorrichtung, die zumindest in einem optischen Zustand transparent ist.

Gemäß einem Ausführungsbeispiel ist die Gegenelektrode unstrukturiert. Dies ermöglicht eine einfache Ausgestaltung der Vorrichtung, da auf einen Schritt zur Strukturierung der Gegenelektrode verzichtet werden kann. Alternativ ermöglicht eine strukturierte Gegenelektrode eine hohe Flexibilität der räumlichen Ansteuerung.

Gemäß einem Ausführungsbeispiel ist die Arbeitselektrode so ausgestaltet, dass sie eine Vielzahl von Teilbereichen aufweist, die voneinander durch eine Mehrzahl von Zwischenbereichen beabstandet sind. Dies ermöglicht den Erhalt einer Vorrichtung mit komplexen optischen Mustern, die geschaltet werden können.

Gemäß einem Ausführungsbeispiel ist die Vorrichtung als elektrochrome Iris gebildet. Dies ermöglicht den Einsatz in vielfältigen optischen Anwendungen, etwa Kameras insbesondere miniaturisierte Kameras, die bspw. in einem Smartphone, Laptop, optischen Messvorrichtungen oder Abbildungsgeräte, wie etwa Endoskope, Mikroskope, Ferngläsern (hier auch als schaltbare Absehen), Teleskope oder dergleichen eingesetzt werden können. Weitere Anwendungen liegen beispielsweise in der Medizintechnik (Endoskopie) und in anderen Handheld Systemen (Smart Glasses etc.).

Gemäß einem Ausführungsbeispiel umschließt der zweite Teilbereich den ersten Teilbereich. Dies ermöglicht den Erhalt einer variablen Blende.

Gemäß einem Ausführungsbeispiel ist die Arbeitselektrode in eine Vielzahl von Elektrodenbereichen umfassend den ersten Elektrodenbereich und den zweiten Elektrodenbereich strukturiert, wobei die Vorrichtung als Pixelstruktur mit einer Vielzahl von Pixeln gebildet ist, wobei jedes Pixel einen Elektrodenbereich der Vielzahl von Elektrodenbereiche umfasst. Eine Ausbildung der Vorrichtung als Pixelstruktur ermöglicht den Erhalt einer Anzeigevorrichtung, etwa eines Displays, bei dem Spalte zwischen einzelnen Pixeln vermieden werden, so dass die optische Darstellung in einer hohen Qualität erfolgen kann.

Gemäß einem Ausführungsbeispiel ist die Arbeitselektrode in eine Vielzahl von Elektrodenbereichen umfassend den ersten Elektrodenbereich und den zweiten Elektrodenbereich strukturiert, wobei die Vorrichtung als Balkenstruktur mit einer Vielzahl von Balken gebildet ist. Jeder Balken umfasst einen Elektrodenbereich der Vielzahl von Elektrodenbereichen. Insbesondere kann eine derartige Vorrichtung als Target (Referenzmuster) eines räumlichen Kalibrierstandards ansteuerbar sein. Dies ermöglicht den Erhalt eines universellen und gleichzeitig hochqualitativen Kalibriertargets.

Gemäß einem Ausführungsbeispiel ist die Vorrichtung als einstellbares Kalibriertarget gebildet. Dies ermöglicht die Darstellung von unterschiedlichen Raumfrequenzen im zeitlichen Wechsel und dadurch raumsparend.

Gemäß einem Ausführungsbeispiel ist das aktive Material ausgebildet, um eine Lichtemission bereitzustellen, was eine hohe Funktionalität ermöglicht.

Gemäß einem Ausführungsbeispiel ist das aktive Material ausgebildet, um die Phase einer durchlaufenden elektromagnetischen Welle zu beeinflussen, was eine hohe Funktionalität ermöglicht.

Gemäß einem Ausführungsbeispiel ist die Gegenelektrode und/oder die Arbeitselektrode reflektierend gebildet. Dies ermöglicht eine reflektierende Vorrichtung
Gemäß einem Ausführungsbeispiel umfasst ein System eine erfindungsgemäße Vorrichtung und eine Ansteuereinrichtung, die konfiguriert ist, um gleichzeitig ein Bezugspotential (Φ₀) an die Gegenelektrode anzulegen, ein bezogen auf das Bezugspotential erstes Potential an den ersten Elektrodenbereich anzulegen und ein bezogen auf das Bezugspotential zweites Potential an den zweiten Elektrodenbereich anzulegen. Dies ermöglicht den Übergang zwischen dem ersten optischen Zustand im ersten Elektrodenbereich und dem zweiten optischen Zustand im zweiten Elektrodenbereich in einem vergleichsweise kleinen lateralen Bereich des aktiven Materials.

Gemäß einem Ausführungsbeispiel ist die Ansteuereinrichtung ausgebildet, um das erste Potential und das zweite Potential so anzulegen, dass ein Übergang zwischen einem ersten optischen Zustand in einem Bereich des ersten Elektrodenbereichs und einem zweiten optischen Zustand in einem Bereich des zweiten Elektrodenbereichs in einem Übergangsbereich mit einer Abmessung von höchstens 5 µm ±50 % erfolgt. Dies ermöglicht den Erhalt des Übergangs in einem Bereich, der vom menschlichen Auge noch als scharfe Kante empfunden wird. Obwohl somit ein kontinuierlicher Übergang zwischen den beiden Zuständen erfolgen kann, wird dies vom Betrachter noch als scharfer Übergang gewertet, was auch für den Einsatz in optischen Vorrichtungen Vorteile bietet, bei denen die Abbildungsgüte vom Erhalt eines scharfen Rands beeinflusst ist.

Gemäß einem Ausführungsbeispiel ist die Ansteuereinrichtung ausgebildet, um das erste Potential (Φ₁) und das zweite Potential (Φ₂) so anzulegen, dass eine Potentialdifferenz erhalten wird, die im Bereich eines Redoxpotentials des aktiven Materials liegt.

Gemäß einem Ausführungsbeispiel ist das System als Apodisationsfilter gebildet. Derartige Ausführungsbeispiele ermöglichen somit Apodisationsfilter mit einem komplexen radialen Absorptionsverlauf, bspw. wenn ausgehend von einem Mittelpunkt einzelne oder Gruppen von Ringen geschalten und zumindest einzelne Ringe nicht geschalten werden.

Gemäß einem Ausführungsbeispiel ist die Ansteuereinrichtung ausgebildet, um die Vorrichtung als Gradientenfilter zu betreiben, was Gradientenfilter mit einer hohen Qualität ermöglicht.

Die vorliegende Erfindung schafft ein Verfahren zum Bereitstellen besagter Vorrichtung zum bereichsweisen Ändern einer optischen Eigenschaft. Das Verfahren weist ein Anordnen einer Gegenelektrode und ein Anordnen eines aktiven Materials auf, so dass das aktive Material ausgebildet ist, um basierend auf einem elektrischen Spannung zwischen der Gegenelektrode und der Arbeitselektrode die optische Eigenschaft zu verändern. Das Verfahren umfasst ein Anordnen einer Arbeitselektrode, die eine Strukturierung in zumindest einen ersten Elektrodenbereich und einen zweiten Elektrodenbereich aufweist, so dass zwischen dem ersten Elektrodenbereich und dem zweiten Elektrodenbereich ein Zwischenbereich angeordnet ist, in dem das aktive Material vorliegt. Das aktive Material bildet eine zusammenhängende Schicht, die zumindest einen Teilbereich des ersten Elektrodenbereichs und einen Teilbereich des zweiten Elektrodenbereichs bedeckt und in dem Zwischenbereich angeordnet ist.

Gemäß einem Ausführungsbeispiel erfolgt das Anordnen des aktiven Materials durch Ausführen eines Druckverfahrens. Vorteilhaft daran ist, dass das Druckverfahren eine einfache und kostengünstige Möglichkeit des Anordnens ist und gleichzeitig Nachteile derartiger Verfahren, etwa im Hinblick auf ungenaue Bereichsgrenzen, vermieden werden, da das aktive Material als durchgehende oder zusammenhängende Schicht angeordnet wird.

Bevorzugte Ausführungsformen werden nachfolgend Bezug nehmend auf die beiliegenden Zeichnungen erläutert. Es zeigen:
- Fig. 1a: eine schematische Seitenschnittansicht einer Vorrichtung gemäß einem Ausführungsbeispiel;
- Fig. 1b: eine schematische Aufsicht auf eine strukturierte Elektrode aus Fig. 1a, die Elektrodenbereiche aufweist;
- Fig. 2a: eine schematische Seitenschnittansicht einer Vorrichtung gemäß einem Ausführungsbeispiel, bei dem das aktives Material mit veränderlicher Dicke und in einem Spalt zwischen Elektrodenbereichen angeordnet ist;
- Fig. 2b: eine schematische Seitenschnittansicht einer Vorrichtung gemäß einem Ausführungsbeispiel, bei dem das aktives Material mit veränderlicher Dicke in einem Bereich der Elektrodenbereiche angeordnet ist;
- Fig. 3a: eine schematische Seitenschnittansicht einer Vorrichtung gemäß einem Ausführungsbeispiel, bei der zwischen dem aktiven Material und einer Elektrode ein Elektrolyt angeordnet sein kann;
- Fig. 3b: eine schematische Aufsicht auf einen Teil der Vorrichtung aus Fig. 3a zur Verdeutlichung der Elektrodenbereiche der strukturierten Elektrode;
- Fig. 3c: eine schematische Aufsicht auf eine Vorrichtung gemäß einem Ausführungsbeispiel, bei dem die Zuleitungen zu den Teilbereichen der Arbeitselektrode in einer Ebene unter dem aktiven Material elektrisch gegeneinander isoliert vergraben sind;
- Fig. 3d: eine schematische Seitenschnittansicht der Vorrichtung aus Fig. 3c;
- Fig. 3e: eine schematische Seitenschnittansicht einer Vorrichtung gemäß einem Ausführungsbeispiel, bei der zusätzlich die Gegenelektrode strukturiert ist;
- Fig. 4a: eine schematische Aufsicht auf eine beispielhafte alternative Konfiguration der strukturierten Elektrode gemäß einem Ausführungsbeispiel mit drei oder mehr einander umschließenden Elektrodenbereiche;
- Fig. 4b: eine schematische Aufsicht auf eine weitere alternative Konfiguration der strukturierten Elektrode gemäß einem Ausführungsbeispiel, bei der die Elektrodenbereiche eine dreieckige Form aufweisen;
- Fig. 4c: eine schematische Aufsicht auf eine Vorrichtung gemäß dem Stand der Technik, bei der Pixelelemente bildende Teilbereiche angeordnet sind;
- Fig. 4d: eine Vorrichtung mit der Elektroden-Konfiguration gemäß Fig. 4c, die gemäß einem Ausführungsbeispiel ausgestaltet ist;
- Fig. 4e: eine schematische Aufsicht auf die Elektrodenkonfiguration gemäß Fig. 4d, die gemäß einem Ausführungsbeispiel als Gradientenfilter betrieben wird;
- Fig. 4f: eine schematische Aufsicht auf eine Konfiguration der Arbeitselektrode, die in bspw. zwei konzentrische Kreise mit jeweils exemplarisch 12 Kreissegmente aufgeteilt ist; gemäß einem Ausführungsbeispiel;
- Fig. 5a-f: schematische Aufsichten auf eine Vorrichtung gemäß einem Ausführungsbeispiel, die als elektrochrome Iris mit drei Elektrodenbereichen gebildet ist, die individuell ansteuerbar sind und in unterschiedlichen Schaltzuständen der Elektrodenbereiche dargestellt sind;
- Fig. 6a-e: schematische Aufsichten auf eine Vorrichtung gemäß einem Ausführungsbeispiel, bei dem die strukturierte Elektrode als Balkenstruktur mit einer Vielzahl von Balken gebildet ist in unterschiedlichen Schaltzuständen;
- Fig. 7a-c: schematische Graphen von Potentialverläufen gemäß einem Ausführungsbeispiel;
- Fig. 7d: eine schematische Seitenschnittansicht einer Vorrichtung zur Veranschaulichung der Figuren 7a-c gemäß einem Ausführungsbeispiel;
- Fig. 7e-g: schematische Graphen einer möglichen Variation einer optischen Eigenschaft über das anliegende Potential gemäß einem Ausführungsbeispiel;
- Fig. 8: ein schematisches Blockschaltbild eines Systems gemäß eines Ausführungsbeispiels;
- Fig. 9a: einen Querschnitt einer elektrochemischen Zelle gemäß dem Stand der Technik;
- Fig. 9b: eine Aufsicht der elektrochemischen Zelle gemäß Fig. 9a; und
- Fig. 10a-d: Photographien verschiedener Schaltzustände einer dreistufigen Iris gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungen nehmen Bezug auf Vorrichtungen zum bereichsweisen Ändern einer Absorptionseigenschaft. Zu solchen Vorrichtungen zählen insbesondere Mikro-Iriden. Ausführungsbeispiele sind jedoch nicht hierauf beschränkt, sondern beziehen sich im gleichen Maße auch auf andere Absorptions-, Emissions- und/oder Transmissionsstrukturen, etwa optische Filter, was auch nicht-sichtbare Wellenlängenbereiche wie ultraviolett oder Infrarot einschließt, Gradientenfilter, Pixelstrukturen mit einzelschaltbaren Pixeln (Bildelementen), Balkenstrukturen und/oder freidefinierte Elektroden.

Das aktive Material ist durch Anlegen eines elektrischen Feldes steuerbar. Hierdurch kann die komplexwertige Brechzahl des aktiven Materials gesteuert werden, die sich aus einem Realteil und einem Imaginärteil zusammensetzt und je nach Ausgestaltung richtungsunabhängig oder richtungsabhängig sein kann. Bei einer Richtungsabhängigkeit können Realteil und Imaginärteil als Tensoren dargestellt werden. Daraus resultiert die Möglichkeit, die Absorption und/oder die reelle Brechzahl (mit der Wirkung einer Phasenverschiebung auf eine durchlaufende Welle) und/oder die räumliche Veränderung aller genannten Größen zu steuern. Ausführungsbeispiele der vorliegenden Erfindung sind deshalb nicht auf die Änderung einer Absorptionseigenschaft beschränkt sondern beziehen sich auch auf die Veränderung anderer optischer Eigenschaften wie eine lokale Phasenverschiebung, die ein aktives Material an einem durchlaufenden Licht oder anderer elektromagnetischer Strahlung bewirkt und/oder auf eine Lichtemissionseigenschaft. Das Ändern der optischen Eigenschaft kann kontinuierlich oder diskontinuierlich erfolgen, bspw. binär im Sinne von "an/aus" oder auch mehrstufig.

Ausführungsbeispiele der vorliegenden Erfindung umfassen hierfür Elektroden, insbesondere eine Gegenelektrode und eine Arbeitselektrode. Zumindest eine dieser Elektroden ist in zumindest einen ersten Elektrodenbereich und einen zweiten Elektrodenbereich strukturiert. Das bedeutet, an den ersten Elektrodenbereich und den zweiten Elektrodenbereich können unabhängig voneinander elektrische Potentiale angelegt werden. Dies schließt die Möglichkeit mit ein, ein gleiches Potential (identischer Potentialwert) anzulegen, jedoch ist es insbesondere möglich, voneinander verschiedene Potentiale an die unterschiedlichen Elektrodenbereiche anzulegen. Die Elektroden sind bevorzugt aus transparenten, leitfähigen Materialien gebildet, insbesondere aus transparenten elektrisch leitfähigen Oxiden (Transparent Conductive Oxide - TCO). Beispiele für derartige TCO sind Indium-Zinn-Oxid (ITO), Fluor-Zinn-Oxid (FTO), Aluminium-Zink-Oxid (AZO), Ceroxid (CeO) und/oder Antimon-Zinn-Oxid (ATO). Andere Materialien und/oder Kombinationen hieraus sind ebenso möglich, bspw. Graphen. In einem anderen Ausführungsbeispiel kann eine der Elektroden als reflektierende Elektrode ausgelegt sein.

Die Gegen- und Arbeitselektrode können einander gegenüberliegend angeordnet sein, so dass zwischen dem jeweiligen Elektrodenbereich und der gegenüberliegenden Elektrode ein entsprechendes elektrisches Feld und/oder Ladungsträgerstrom ausgebildet werden kann. Optional weist auch die andere Elektrode eine Strukturierung auf. Diese kann identisch mit der Strukturierung der strukturierten Elektrode ausgeführt sein.

Ausführungsbeispiele beziehen sich ferner auf die Anordnung eines aktiven Materials. Insbesondere wird hierunter Bezug genommen auf ein optisch aktives Material, welches bei Anlegen einer elektrischen Spannung eine optische Eigenschaft bzw. eine Absorptionseigenschaft, eine Transmissionseigenschaft und/oder eine Emissionseigenschaft ändert. Eine optische Eigenschaft oder Absorptionseigenschaft ist beispielsweise eine Färbung und/oder ein zumindest teilweiser Wechsel zwischen absorbierend und transparent bzw. transparent und absorbierend. Beides wird im Zusammenhang mit den vorliegend erläuterten Ausführungsbeispielen mit dem Begriff der Absorptionseigenschaft zusammengefasst. Eine veränderliche Absorption und/oder Transmission können eine Färbung und/oder eine veränderliche Transparenz des aktiven Materials ergeben.. Anders ausgedrückt kann auch eine Einfärbung des aktiven Materials als binäres oder analoges/kontinuierliches Schalten zwischen transparent und absorbierend verstanden werden. Das aktive Material kann elektrochrome Moleküle aufweisen, etwa Viologenderivate. Ferner kann das aktive Material Nanopartikel aufweisen, an denen die elektrochromen Moleküle gebunden sind. In Ausführungsbeispielen haften die elektrochromen Moleküle an den Nanopartikeln an. Alternativ oder zusätzlich können auch die Nanopartikel selbst elektrochrome Eigenschaften aufweisen. Beispiele für derartige Nanopartikeln sind TiO₂-Nanopartikeln. Alternativ oder zusätzlich kann das aktive Material auch eine Kombination aus elektrochromen Nanopartikeln, d. h., Nanopartikeln mit elektrochromen Eigenschaften, und daran anhaftenden bzw. daran gebundenen elektrochromen Molekülen aufweisen.

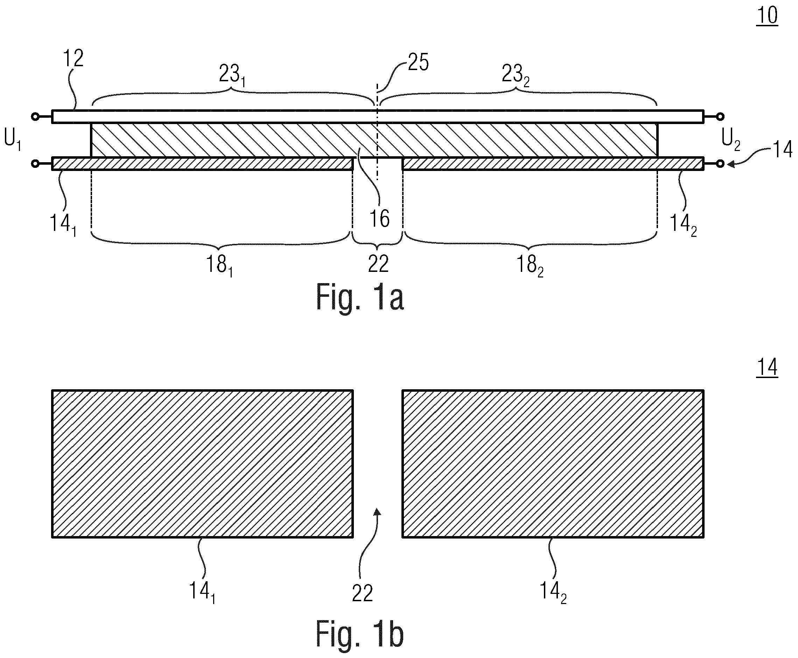

Fig. 1a zeigt eine schematische Seitenschnittansicht einer Vorrichtung 10 gemäß einem Ausführungsbeispiel. Die Vorrichtung 10 umfasst eine erste Elektrode 12 und eine gegenüberliegend angeordnete zweite Elektrode 14. Für die weiteren Erläuterungen kann die erste Elektrode 12 als Gegenelektrode bezeichnet werden, während die zweite Elektrode 14 als Arbeitselektrode bezeichnet werden kann, an die bspw. ein veränderliches elektrisches Potential anlegbar ist, während die Gegenelektrode ein Referenzpotential, Bezugspotential oder Gegenpotential (Φ₀) für die Arbeitselektrode bereitstellen kann, das möglicherweise aber nicht notwendigerweise unverändert bleiben kann. Zumindest die Elektrode 14 ist in einem ersten Elektrodenbereich 14₁ und einem zweiten Elektrodenbereich 14₂ strukturiert.

Zumindest eine der Elektroden 12 und/oder 14 sowie eventueller zusätzlicher Substratschichten kann transparent gebildet sein, etwa durch Anordnen einer TCO-Schicht, d. h., die Elektrode 12 und/oder 14 kann eine TCO-Schicht umfassen oder daraus bestehen. Ist die zweite Elektrode ebenfalls transparent, so kann das Bauelement in Transmission benutzt werden. Alternativ kann die weitere Elektrode bspw. spiegelnd gebildet sein, etwa durch Anordnen einer reflektierenden Schicht, so dass das Bauelement in Reflexion benutzt werden kann.

Die Elektrodenbereiche 14₁ und 14₂ können galvanisch voneinander getrennt sein, so dass an die Elektrodenbereiche 14₁ und 14₂ voneinander verschiedene elektrische Potentiale anlegbar sein können. So kann zwischen den Elektrodenbereich 14, und die Elektrode 12 eine elektrische Spannung U₁ anlegbar sein und zwischen den Elektrodenbereich 14₂ und die Elektrode 12 kann eine Spannung U₂ anlegbar sein. Obwohl die Elektrode 12 als unstrukturierte Elektrode dargestellt ist, kann auch die Elektrode 12 in zumindest zwei Elektrodenbereiche strukturiert sein, das bedeutet, die hierin beschriebenen Ausführungsbeispiele sind nicht auf eine unstrukturierte Elektrode 12 beschränkt.

In der Elektrochemie wird der Begriff der Referenzelektrode als feststehenden Ausdruck für ein genau definiertes Potential verwendet, gegenüber dem das Potential einer Arbeitselektrode verändert wird oder eingestellt wird, wobei oft davon ausgegangen wird, dass die Referenzelektrode keinen elektrischen Strom aufnimmt. Durch das Potential der Referenzelektrode stellt sich eine entsprechende Stromstärke zur Gegenelektrode ein, das Potential der Gegenelektrode passt sich an. Es wird somit eine Dreielektrodenanordnung verwendet. In anderen Worten nutzen Ausführungsbeispiele keine Referenzelektrode im Sinne der Elektrochemie, da ein exaktes Wissen der Potentiale nicht unbedingt erforderlich ist. Die einzelnen Bauelemente können analog arbeiten, auch wenn keine Referenzelektrode benutzt wird.

Zwischen der Elektrode 12 und der Elektrode 14 ist ein aktives Material 16 angeordnet. Das aktive Material 16 ist ausgebildet, um bei unterschiedlichen elektrischen Potentialen, denen es ausgesetzt ist, unterschiedliche bzw. eine veränderliche optische Eigenschaft aufzuweisen, etwa transparent/farbig, unterschiedliche Absorptionsgrade und/oder unterschiedliche Farben, das bedeutet, unterschiedliche Absorptionseigenschaften. Alternativ oder zusätzlich kann auch zumindest eine andere optische Eigenschaft verändert werden, bspw. eine durch die Variation der reellen Brechzahl des aktiven Materials bewirkte Phasenverschiebung und/oder eine bereitgestellte Lichtemission. Das aktive Material 16 kann bspw. eine Nanopartikelschicht (NPS) und/oder ein elektrochromes/lichtemittierendes Material umfassen, wobei es möglich ist, zumindest ein elektrochromes/lichtemittierendes Molekül an das Nanomaterial zu binden als auch, das elektrochrome/lichtemittierende Material direkt anzuordnen. Das aktive Material 16 bedeckt zumindest teilweise den Elektrodenbereich 14, und zumindest teilweise den Elektrodenbereich 14₂ in Flächenbereichen 18₁ und 18₂. Das bedeutet, die Flächenbereiche 18ᵢ beschreiben Flächenbereiche der Elektrodenbereiche 14₁, die von dem aktiven Material 16 bedeckt werden. Gemäß einem Ausführungsbeispiel ist das aktive Material 16 so angeordnet, dass es die Elektroden 14 und/oder 12 vollständig bedeckt, allerdings sind Ausführungsbeispiele nicht hierauf beschränkt. So kann insbesondere an Rändern der Elektroden 12 und/oder 14 ein Bereich angeordnet sein, in welchem das Material 16 abwesend ist oder nicht angeordnet ist, etwa um dort eine hermetische Dichtung anzuordnen. Das aktive Material 16 ist ferner in einem Zwischenbereich 22 angeordnet. Der Zwischenbereich 22 kann als Zwischenraum oder Abstand zwischen den Elektrodenbereichen 14₁ und 14₂ verstanden werden. Beispielsweise kann durch die Strukturierung der Elektrode 14 der Zwischenbereich 22 erzeugt werden.

Das aktive Material kann durch die elektrischen Spannungen U₁ und/oder U₂ beeinflusst werden und zwar derart, dass jeweilige Abschnitte oder Teilbereiche 23₁ und/oder 23₂ des aktiven Materials, die in dem Einfluss der elektrischen Spannung U₁ bzw. U₂ stehen, bezüglich der Absorptionseigenschaft beeinflusst oder verändert werden. Die Flächenausdehnung der Teilbereiche 23₁ und/oder 23₂ ist zwar von der Ausdehnung und dem Ort der Elektrodenbereiche 14₁ und 14₂ beeinflusst, überragt diese jedoch. Das bedeutet, der Teilbereich 23₁ erstreckst sich ausgehend von einem Bereich zwischen dem Elektrodenbereich 14, und der ersten Elektrode 12 in den Zwischenbereich 22 hinein bzw. in einen Bereich zwischen dem Zwischenbereich 22 und der ersten Elektrode. Der Teilbereich 23₂ erstreckt sich ausgehend von einem Bereich zwischen dem Elektrodenbereich 14₂ und der ersten Elektrode 12 ebenfalls in den Zwischenbereich 22 hinein bzw. in einen Bereich zwischen dem Zwischenbereich 22 und der ersten Elektrode. Das zwischen dem Zwischenbereich angeordnete aktive Material 16 kann von dem jeweils benachbarten Elektrodenbereich 14₁ oder 14₂ mitgeschalten werden, wobei eine Grenze 25 zwischen den Teilbereichen 23₁ und 23₂ basierend auf veränderlichen Spannungen U₁ und/oder U₂ veränderlich sein kann oder konstant sein kann.

In Kombination mit weiteren optischen Eigenschaften kann eine Funktionsintegration der Vorrichtung 10 erhalten werden. So sehen es Ausführungsbeispiele vor, dass sowohl die Elektroden 12 als auch 14 zumindest in einem anwendungsabhängigen zusammenhängenden oder verteilten Wellenlängenbereich transparent ausgestaltet sind, etwa dem sichtbaren Wellenlängenbereich, dem Infrarot-Wellenlängenbereich, dem Ultraviolett-Wellenlängenbereich und/oder anderen Wellenlängenbereichen. In einem Zustand geringer oder teilweiser Absorption durch das aktive Material 16 kann die Vorrichtung 10 zumindest teilweise transparent gebildet sein.

Gemäß Ausführungsbeispielen ist vorgesehen, dass zumindest eine der Elektroden in eine Richtung hin zu dem aktiven Material 16 reflektierend ausgebildet ist. In dem Zustand geringer oder teilweiser Absorption durch das aktive Material 16 kann die Vorrichtung 10 zumindest teilweise reflektierend gebildet sein, etwa zur Implementierung eines räumlich absorbierenden Spiegels.

Gemäß Ausführungsbeispielen ist eine Kombination einer transparenten Ausgestaltung mit einer reflektierenden Ausgestaltung vorgesehen. So kann die Vorrichtung 10 eine reflektierende Schicht aufweisen, etwa gebildet durch die Elektrode 12 oder 14. Das aktive Material 16 kann genutzt werden, um Bereiche zu steuern, die nicht, bzw. teilweise reflektieren sollen. Dazu kann, verglichen mit anderen Ausführungsbeispielen, eine der transparenten Elektroden durch einen metallische Schicht als Spiegel ersetzt werden, oder alternativ durch einen dielektrischen Spiegel, der mit einer leitfähigen möglicher Weise auch transparenten Schicht beschichtet ist.

Eine weitere Funktionsintegration ist durch Ausgestaltung zumindest einer der Elektroden 12 und/oder 14 als reflektierende elektrochrome Blende möglich, welche auch in einen transparenten Zustand steuerbar ist. Die Elektrode 12 und/oder 14 kann somit in einem aktiven und/oder passiven Zustand reflektierend gebildet sein.

Durch das elektrische Schalten der Absorptionseigenschaft kann die Absorption in ihrer Stärke analog eingestellt werden. Indirekt kann hierdurch auch die Transmission bzw. Reflexion der Vorrichtung eingestellt werden. Das Einstellen der Absorption kann bei transmittierenden Bauteilen bedeuten, dass sie im bspw. geschalteten Zustand nur noch teiltransparent sind. Bei reflektierenden Bauteilen kann das Einstellen der Absorption bedeuten, dass sie im bspw. ungeschaltenen Zustand im nicht-geschalteten Bereich Licht reflektieren, und in den anderen Bereichen, dass das Licht teilabsorbiert oder teilweise absorbiert wird. Teilweise kann bedeuten, dass die Absorption gemäß Ausführungsbeispielen lediglich teilweise eingeschaltet werden kann.

Obwohl es nicht erforderlich ist, dass das aktive Material 16 Lichtemissionen bereitstellt, liegt es im Rahmen der Ausführungsbeispiele, ein oder mehrere leuchtende aktive Materialen vorzusehen, die für die gleiche Idee genutzt werden. Das aktive Material 16 kann ausgebildet sein, um eine Lichtemission bereitzustellen. Dies kann durch eine entsprechende Ausgestaltung des aktiven Materials 16 ansprechend auf ein elektrisches Signal, basierend auf einer Elektrolumineszenz und/oder basierend auf einer Fluoreszenz erfolgen.

Ein Abstand zwischen den Teilbereichen 23₁ und 23₂ kann basierend auf der durchgehenden Schicht des aktiven Materials 16 im Falle einer Aktivierung des aktiven Materials 16 in beiden Teilbereichen 23₁ und 23₂ klein oder gar abwesend sein bzw. so ausgestaltet sein, dass er für einen Betrachter nicht wahrnehmbar ist.

Fig. 1b zeigt eine schematische Aufsicht auf die Elektrode 14, die die Elektrodenbereiche 14₁ und 14₂ aufweist.

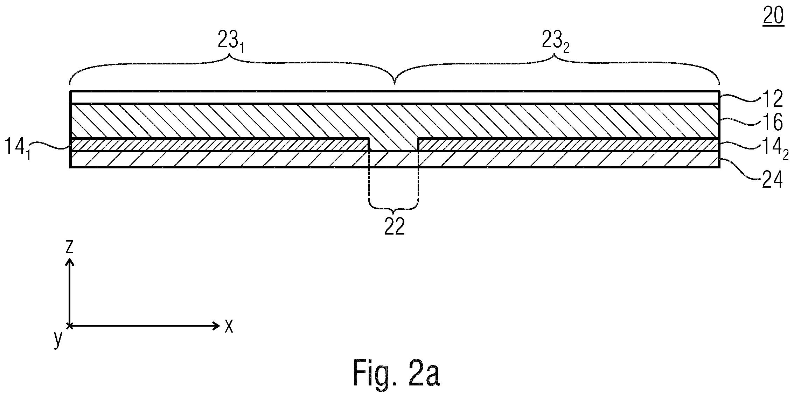

Fig. 2a zeigt eine schematische Seitenschnittansicht einer Vorrichtung 20 gemäß einem Ausführungsbeispiel. Das aktive Material 16 ist, verglichen mit der Vorrichtung 10, nicht nur an der der Elektrode 12 zugewandten Hauptseite der Elektrodenbereiche 14₁ und 14₂ angeordnet, sondern bedeckt auch die Nebenseiten, die den Zwischenbereich 22 definieren. Entlang einer lateralen Richtung, beispielsweise der x-Richtung, die sich ausgehend von dem Elektrodenbereich 14, über den Zwischenbereich 22 hinweg hin zu dem Elektrodenbereich 14₂ erstreckt, kann das aktive Material 16 eine veränderliche Materialdicke aufweisen. Als Materialdicke kann beispielsweise eine Schichtstärke der Schicht des aktiven Materials 16 entlang einer Richtung senkrecht zu der lateralen Richtung x verstanden werden, beispielsweise eine Richtung ausgehend von der Elektrode 14 hin zu der Elektrode 12, beispielsweise die z-Richtung. Das bedeutet, dass das aktive Material 16 eine veränderliche Materialdicke über die x-Richtung aufweisen kann, wenn die Materialdicke in den Elektrodenbereiche 14₁ und 14₂ mit der Materialdicke im Zwischenbereich 22 verglichen wird. Bspw. kann eine Schichtdicke in dem Zwischenbereich um eine Materialdicke der Elektrode 14 größer sein, bspw. in einem Bereich von in etwa 10 nm, 50 nm oder 100 nm aber auch einen beliebigen anderen Wert. In den Elektrodenbereichen 14₁ und/oder 14₂ kann die Materialdicke einen Wert aufweisen, der um zumindest eine Größenordnung größer ist, als der Wert der Elektrode, bspw. von zumindest 1000 nm oder zumindest 3000 nm, etwa 3500 nm oder mehr, etwa 10 µm.

Das aktive Material 16 kann auch in dem Zwischenbereich 22 so angeordnet sein, dass es die durch die Strukturierung entstehenden Spalte ausfüllt. Dies ermöglicht insbesondere die Verwendung von Druckverfahren für die Anordnung des aktiven Materials 16 während einer Herstellung der Vorrichtung 20.

Die Vorrichtung 20 kann ein Substrat 24 aufweisen, das bevorzugt transparent ist. Hierfür können sich transparente Polymere oder Oxide eignen, alternativ oder zusätzlich kann auch ein Glasmaterial eingesetzt werden. Während einer Herstellung kann das Substrat 24 die Anordnung weiterer Komponenten unterstützen oder vereinfachen. Wird das Substrat 24 lediglich während der Herstellung verwendet, so kann es auch zumindest teilweise opak gebildet sein und beispielsweise nach erfolgter Herstellung entfernt werden.

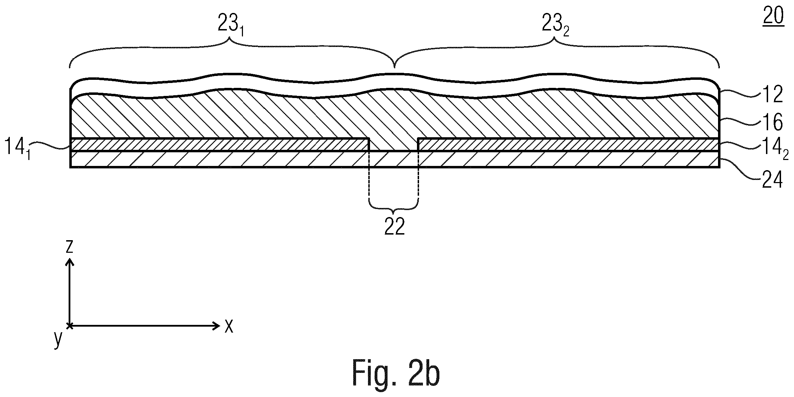

Fig. 2b zeigt eine schematische Seitenschnittansicht einer Vorrichtung gemäß einem Ausführungsbeispiel, bei dem das aktives Material mit veränderlicher Dicke in einem Bereich der Elektrodenbereiche angeordnet ist, etwa im Bereich 23₁ und/oder 23₂. Die Elektrode 12 kann eine konstante Schichtdicke aufweisen und bspw. uneben auf einer dem aktiven Material 16 abgewandten Seite sein, kann alternativ aber auch eine veränderliche Schichtdicke aufweisen, etwa um zumindest teilweise die Schichtdickenvariation zu kompensieren.

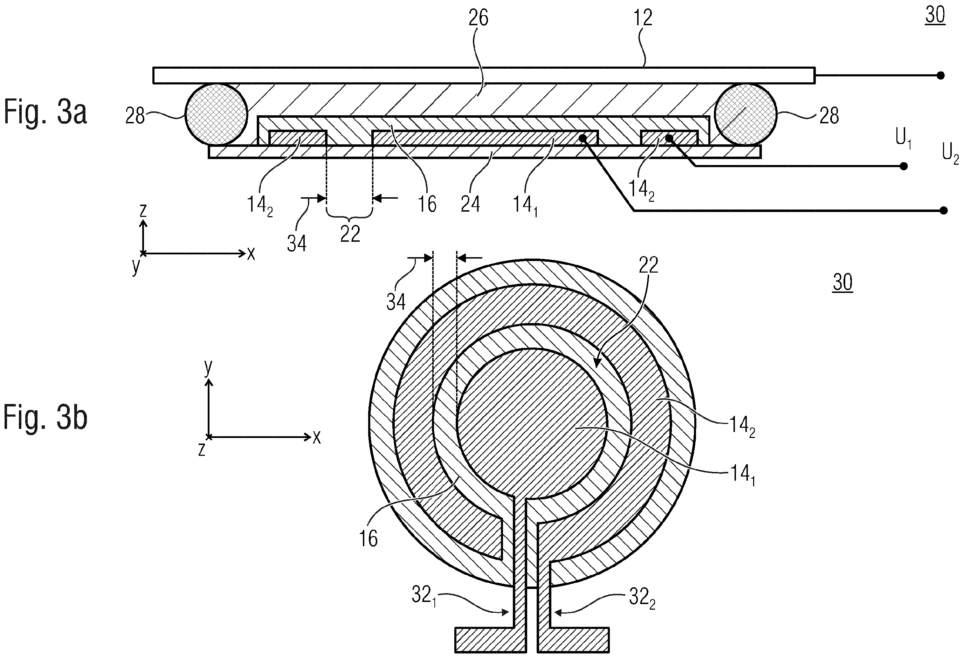

Fig. 3a zeigt eine schematische Seitenschnittansicht einer Vorrichtung 30 gemäß einem Ausführungsbeispiel, bei der zwischen dem aktiven Material 16 und der Elektrode 12 ein Elektrolyt 26 angeordnet sein kann. Als Elektrolyt kann ein oder mehrere bekannte Elektrolyte verwendet werden, bspw. LiClO₄ in Propylencarbonat.

Zwischen der Elektrode 12 und dem Substrat 24, alternativ zwischen der Elektrode 12 und dem aktiven Material 16, kann eine Dichtung 28 angeordnet sein, das bedeutet, ein Material oder ein Körper, der ein Entweichen des Elektrolyts 26 und/oder das Eindringen von Sauerstoff und Wasser verhindert. Die Dichtung 28 ist bevorzugt als hermetische Dichtung gebildet. Alternativ kann die Abdichtung auch durch Bond- oder Klebeprozesse erfolgen.

Der Elektrolyt kann ausgebildet sein, um basierend auf einer elektrischen Leitfähigkeit eine elektrische Verbindung zwischen der Elektrode 12 und dem aktiven Material 16, bzw. der Elektrode 14 bereitzustellen, das bedeutet, eine Ladungsaustausch zu ermöglichen. Ein elektrischer Kurzschluss zwischen der Elektrode 12 und dem Elektrodenbereich 14₂ ist jedoch verhindert. Obwohl die Vorrichtung 30 so dargestellt ist, dass der Elektrolyt 26 zwischen dem aktiven Material 16 und der Elektrode 12 angeordnet ist, kann der Elektrolyt 26 auch zwischen dem aktiven Material 16 und der Elektrode 14 angeordnet sein.

Fig. 3b zeigt eine schematische Aufsicht auf einen Teil der Vorrichtung 30 zur Verdeutlichung der Elektrodenbereiche 14₁ und 14₂. Das aktive Material 16 weist beispielhaft einen Überhang oder Überlapp bezogen auf die Elektrodenbereiche 14₁ und 14₂ auf, das bedeutet, das aktive Material ist sowohl ganzflächig auf den Elektrodenbereichen 14₁ und 14₂ angeordnet, wobei äußere Kontaktbereiche 32₁ und 32₂ möglicherweise hiervon ausgenommen sind. Darüber hinaus ist das aktive Material 16 auch in dem Zwischenbereich 22 zwischen den Elektrodenbereichen 14₁ und 14₂ angeordnet und weist in radialer Richtung ausgehend von dem Elektrodenbereich 14₁ einen Überhang über den Elektrodenbereich 14₂ hinaus auf.

Der Elektrodenbereich 14₂ umschließt den Elektrodenbereich 14₁. Basierend auf der individuellen Ansteuerbarkeit der Elektrodenbereiche 14₁ und 14₂ können somit unterschiedliche Schaltzustände der Vorrichtung 30 erhalten werden, nämlich:
a) ein inaktiver Zustand in den Elektrodenbereichen 14₁ und 14₂;
b) ein aktiver Zustand in dem Elektrodenbereich 14, und ein inaktiver Zustand in dem Elektrodenbereich 14₂;
c) ein inaktiver Zustand in dem Elektrodenbereich 14₁ und ein aktiver Zustand in dem Elektrodenbereich 14₂; und
d) ein aktiver Zustand in beiden Elektrodenbereichen 14₁ und 14₂.
Basierend auf der Geometrie der Elektrodenbereiche 14₁ und 14₂ kann die Vorrichtung 30 auch als elektrochrome Iris bezeichnet werden.

Mit Ausnahme von Öffnungen oder Stegen, die der elektrischen Verbindung der Elektrodenbereiche 14₁ und 14₂ mit den Kontaktbereichen 32₁ bzw. 32₂ dienen, kann der Elektrodenbereich 14₂ den Elektrodenbereich 14₁ vollständig umschließen. Es können auch zusätzliche Elektrodenbereiche angeordnet sein, die beispielsweise den Elektrodenbereich 14₂ umschließen und/oder von dem Elektrodenbereich 14₁ umschlossen werden. Zwischen jedem der Elektrodenbereiche kann ein entsprechender Zwischenbereich angeordnet sein, der jeweils eine Beabstandung zwischen den Elektrodenbereichen bereitstellt.

Der Zwischenbereich 22 kann eine Abmessung 34, beispielsweise entlang der x-Richtung oder einer anderen Richtung etwa einer radialen Richtung aufweisen, die einer optischen Auslegungsregel folgt. Die Abmessung kann einen beliebigen Wert aufweisen, etwa einen Wert von höchstens 10 mm, höchstens 5 mm, höchstens 1 mm, höchsten 100 µm, höchstens 80 µm oder höchstens 50 µm aufweist. Ein Maximalwert der Abmessung 34 kann beispielsweise davon beeinflusst sein, in welchem Bereich um einen Elektrodenbereich 14₁ und/oder 14₂ herum mit dem maximal zulässigen oder vorgesehenen elektrischen Spannungen die Absorptionseigenschaft des aktiven Materials 16 einstellbar ist, insbesondere so, dass bei einer Aktivierung beider Elektrodenbereiche die Eigenschaft des aktiven Materials in dem Zwischenbereich 22 homogen eingestellt wird.

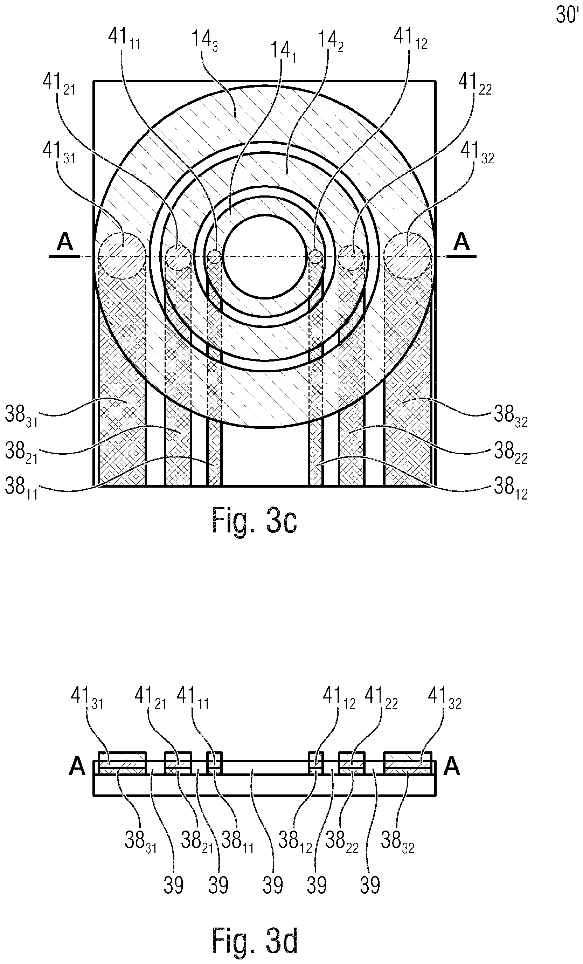

Fig. 3a und Fig. 3b zeigt eine Strukturierung des Stapels in einer Ebene der Stapellage (engl.: in-plane), etwa durch Unterbrechung des Teilbereichs 14₁, so dass eine Durchführung einer Zuleitung zum Teilbereich 14₂ ermöglicht wird. Die Fig. 3c und Fig. 3d zeigen eine alternative Ausgestaltung gemäß Ausführungsbeispielen, bei denen ein Schichtstapel aufgebaut wird, bei dem die Teilbereiche 14₁, 14₂ und 14₃ als durchgehende Ringstrukturen gebildet sind, die über zumindest eine, wie dargestellt zwei oder ggf. mehrere Steuerelektroden 38₁₁ und 38₁₂, 38₂₁ und 38₂₂ bzw. 38₃₁ und 38₃₂ mit einem elektrischen Potential beaufschlagbar sind. Die Arbeitselektroden können in einer Ebene unter dem aktiven Material vergraben sein. Fig. 3c zeigt eine schematische Aufsicht auf eine derartige Vorrichtung 30', während Fig. 3d eine schematische Seitenschnittansicht der Vorrichtung 30' zeigt. Zuleitungen zu den Teilbereichen der Arbeitselektrode in einer Ebene unter dem aktiven Material sind elektrisch gegeneinander isoliert und vergraben.

Die Steuerelektroden 38₁₁ bis 38₃₂ können bspw. aus einer TCO-Schicht gebildet sein, um einen transparenten Zustand zu ermöglichen. Auf die Transparenz der Steuerelektroden 38₁₁ bis 38₃₂ kann im Falle eines gewünschten reflektierenden Zustandes möglicherweise verzichtet werden.

Die Steuerelektroden 38₁₁ bis 38₃₂ können mit einer Isolierschicht 39, beabstandet und/oder teilweise bedeckt werden. Die Isolierschicht kann bevorzugt transparent gebildet sein und bspw. Parylen, Siliziumnitrid (SiN) und/oder besonders bevorzugt Siliziumdioxid (SiO₂) umfassen. An Durchgangsbereichen 41₁₁ bis 41₃₂ der jeweiligen Steuerelektrode 38₁₁ bis 38₃₂ kann die Steuerelektrode mit dem Teilbereich 14₁ bis 14₃ verbunden werden, etwa indem die Isolierschicht 39 in den Durchgangsbereichen 41₁₁ bis 41₃₂ geöffnet wird, und dort der elektrische Kontakt zu den durchgehenden Ringen erzeugt wird. Dies kann auch als Kontaktierung mittels Via-through's (durchreichende Vias) bezeichnet werden.

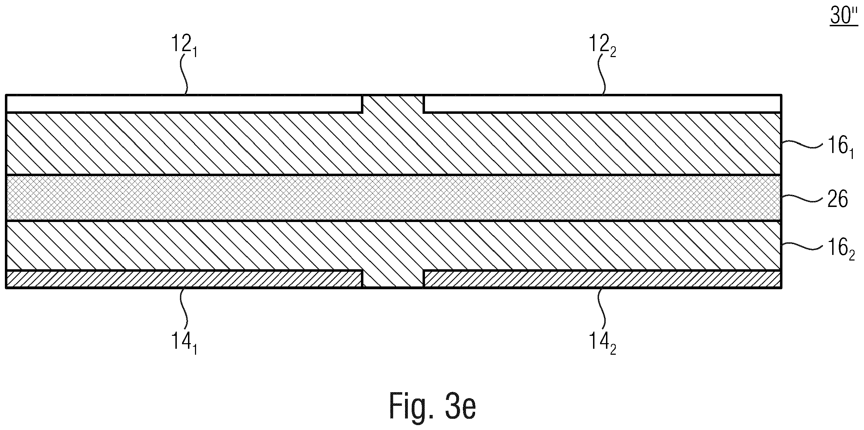

Fig. 3e zeigt eine schematische Seitenschnittansicht einer Vorrichtung 30" gemäß einem Ausführungsbeispiel, anhand dessen weitere vorteilhafte Weiterbildungen erläutert werden, die einzeln oder in beliebiger Kombination auch in Verbindung mit anderen hierin beschriebenen Ausführungsbeispielen implementiert werden können. Die Gegenelektrode 12 kann in ein oder mehrere Elektrodenbereiche 12₁ und 12₂ segmentiert sein, wobei die Segmentierung gleich ausgeführt sein kann, wie bei der Elektrode 14. Bevorzugt sind die Elektrodenbereiche 12ᵢ und 14ᵢ in gleicher Anzahl implementiert, d. h., auch bei der Elektrode 12 ist die Anzahl der Elektrodenbereiche nicht auf zwei beschränkt sondern kann beliebig höher sein. In Ausführungsbeispielen ist vorgesehen, dass beide Elektroden 12 und 14, bspw. innerhalb eines Toleranzbereichs von 10 %, 5 % oder 2 % bezüglich der Anzahl der Elektrodenbereiche, der Größe der Elektrodenbereiche und/oder der Position der Elektrodenbereiche bei einer Projektion in eine gemeinsame Ebene übereinstimmend oder zumindest geometrisch ähnlich strukturiert sind. Alternativ kann die Segmentierung auch voneinander verschieden sein.

Alternativ oder zusätzlich kann an beiden Elektroden ein aktives Material angeordnet sein, so dass zwei (oder mehr) Schichten 16₁ und 16₂ aktiven Materials angeordnet sind. Zumindest eine Schicht des Elektrolyten 26 kann zwischen den Lagen 16₁ und 16₂ angeordnet sein. Das bedeutet, dass der Elektrolyt in einer oder mehreren Schicht angeordnet sein kann bzw. aus Elektrolyt bestehende oder diesen hauptsächlich aufweisende Schichten angeordnet sein können. Es erfolgt somit keine Mischung des Elektrolyten mit aktivem Material, wie es in Flüssigkeiten von LCD (Liquid Crystal Display; Flüssigkristallanzeige) angewendet wird. Die Schichten 16₁ und 16₂ können gleiches oder voneinander verschiedenes aktives Material umfassen. Während eine Verwendung eines gleichen Materials in mehreren Schichten bspw. eine stufenweise kombinatorische Einstellung des optischen Zustands oder der optischen Eigenschaft ermöglicht, kann eine Kombination unterschiedlicher aktiver Materialien eine Kombination von Eigenschaften ermöglichen. So können die aktiven Materialien bspw. spektral unterschiedliche Eigenschaften aufweisen, etwa bezüglich Farbgebung, gefilterter oder beeinflusster Wellenlängen oder dergleichen. Die aktiven Materialien in den Schichten 16₁ und 16₂ können gleichartig sein, bspw. beide aus der Gruppe der Viologe oder der Triarylamine. Alternativ kann auch eine Kombination unterschiedlicher Gruppen verwendet werden. Erfindungsgemäße Ausführungsbeispiele sind nicht auf die Verwendung einer oder zweier Schichten aktiver Materialien beschränkt. Es können auch weitere Schichten verwendet werden, insbesondere unter Verwendung transparenter Elektroden.

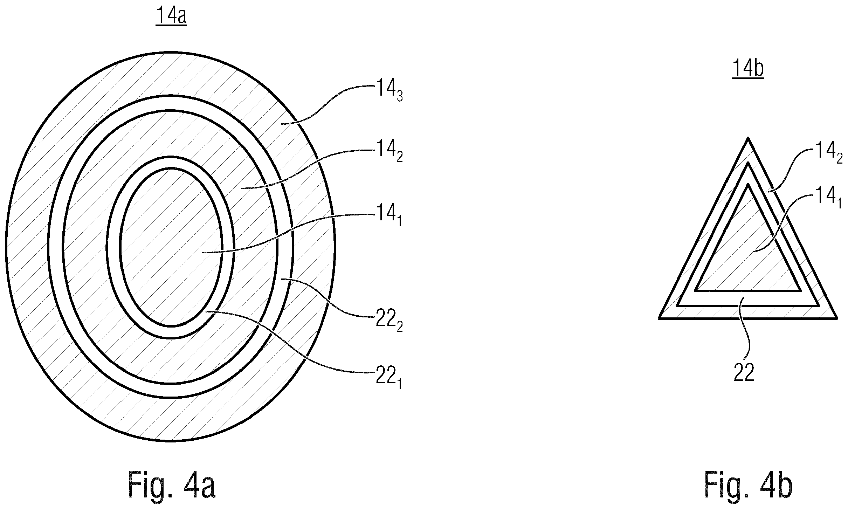

Fig. 4a zeigt eine schematische Aufsicht auf eine beispielhafte alternative Konfiguration 14a der Elektrode 14, die in drei oder mehr einander umschließende Elektrodenbereiche 14, bis 14₃ strukturiert ist. Der innere Elektrodenbereich 14, kann als flächiges Oval ausgebildet sein, kann alternativ jedoch auch ebenso wie die Teilelektrodenbereiche 14₂ und/oder 14₃ als ovale Ringstruktur gebildet sein. Zwischen zwei benachbarten Teilbereichen 14₁ und 14₂ bzw. 14₂ und 14₃ ist jeweils ein Zwischenbereich 22₁ bzw. 22₂ angeordnet, die einen gleichen oder individuellen Abstand zwischen den Teilbereichen der Elektrode 14 einstellen. Eine Ovalstruktur ermöglicht die Anwendung auf geneigten Strahlteilungselementen. Wird die Elektrode 14 bspw. um eine Nebenachse geneigt, bspw. um 45°, so kann sich durch eine erhaltene Stauchung der Hauptachse in einer Strahlrichtung aus dem Oval/der Ellipse wieder ein optisch wirksamer Kreis ergeben, wenn dies angestrebt wird.

Fig. 4b zeigt eine schematische Aufsicht auf eine weiter alternative Konfiguration 14b der Elektrode 14, bei der die Elektrodenbereiche 14₁ und 14₂ eine dreieckige Form aufweisen.

Die Ausführungsbeispiele der hierin beschriebenen Erfindung sind jedoch weder auf eine runde, ovale oder dreieckige Form beschränkt noch darauf angewiesen, dass eine einheitliche Form zwischen den Teilbereichen der Elektrode 14 vorliegt. Gemäß weiteren Ausführungsbeispielen kann eine runde, polygone oder gemäß einer Freiform gewählte Oberfläche der Teilbereiche 14ᵢ gewählt werden. Die Teilbereiche können einander umschließen, können alternativ hierzu aber auch lateral benachbart zueinander angeordnet sein. Möglicherweise können die Teilbereiche durch schmale Verbindungsleitungen verbunden sein, die so geartet sind, dass an ihnen ein wohldefinierter Spannungsabfall stattfindet, sodass die gesamte Anordnung mit nur einer Spannung gesteuert werden kann.

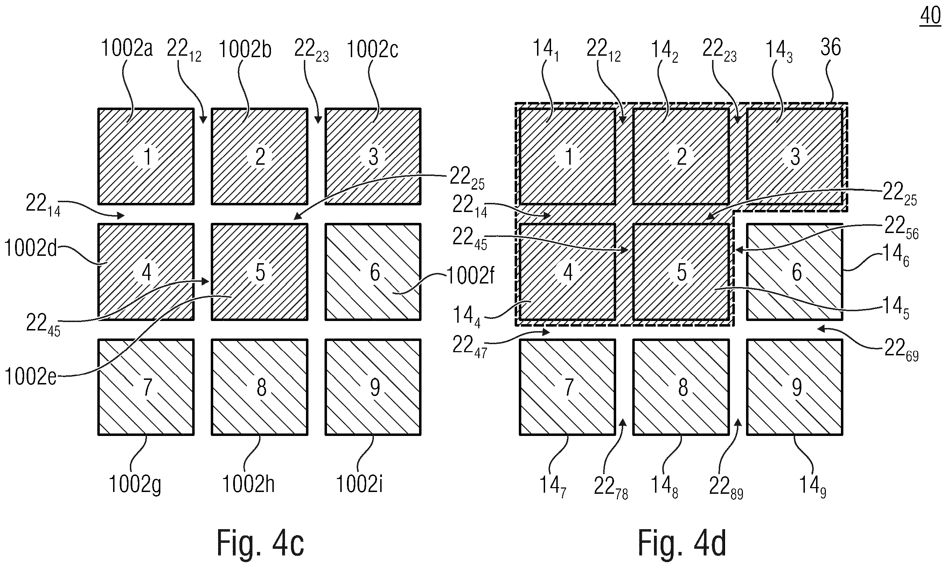

Fig. 4c zeigt eine schematische Aufsicht auf eine Vorrichtung gemäß dem Stand der Technik, bei der mit den Ziffern 1 bis 9 bezeichnete und Pixelelemente bildende Teilbereiche 1002a bis 1002i angeordnet sind, die beispielsweise in Übereinstimmung mit den im Zusammenhang mit der Fig. 9a erläuterten Konfiguration gebildet sind. Das bedeutet, jedes der Pixelelemente ist individuell ansteuerbar und elektrisch isoliert von benachbarten Elementen. Bei einer beispielhaften Ansteuerung der Elemente 1 bis 5 absorbieren diese unabhängig voneinander, wobei in Zwischenräumen 22₁₄ bis 22₄₅ jeweils Spalte ohne optische Aktivierung zutage treten. Angesteuerte Teilbereiche sind voneinander beabstandet.

Fig. 4d zeigt eine mit der Elektroden-Konfiguration gemäß Fig. 4c gemäß einem Ausführungsbeispiel ausgestaltete Vorrichtung 40, wobei in den Zwischenräumen 22₁₂ bis 22₈₉ gemäß den Ausführungen im Zusammenhang mit den hierin beschriebenen Ausführungsbeispielen das aktive Material angeordnet ist. Dies ermöglicht eine Reduzierung oder Vermeidung von Abständen zwischen den Teilbereichen, so dass ein zusammenhängender Absorptionsbereich 36 erhalten werden kann, wobei als Absorptionsbereich ein Bereich verstanden wird, in welchem die Absorptionseigenschaft gesteuert ist. Auf das Absorbieren von Licht sind diese Ausführungen nicht beschränkt.

Bei einer Ansteuerung der Elektrodenbereiche 14₁ bis 14₅ absorbieren somit die jeweiligen Pixelelemente samt der dazwischenliegenden Zwischenbereiche, etwa die Zwischenbereiche 22₁₂, 22₂₃, 22₁₄, 22₂₅ und 22₄₅, das bedeutet, es kann der zusammenhängende Absorptionsbereich 36 erhalten werden. Der Absorptionsbereich 36 kann sich über die jeweiligen Teilbereiche 14₄ und/oder 14₅ hinaus erstrecken, hin zu benachbarten, jedoch nicht aktivierten oder anders angesteuerten Teilbereichen, etwa die Teilbereiche 14₆ bis 14₉, da in den dort angeordneten Zwischenbereichen ebenfalls das aktive Material angeordnet ist und in dem aktiven Material der Potentialabfall stattfindet. Der Rand des Absorptionsbereichs kann aus einer Kombination der jeweiligen Grenze 25 aus Fig. 1a gebildet werden, die den jeweiligen Teilbereichen 14₁ bis 14₉ zugeordnet ist, d. h. als Gesamtfläche. Wird eine der Elektroden als reflektierende Schicht ausgelegt, so kann das Bauteil in Reflexion benutzt werden. Bei einer teilreflektierenden Elektrode ist somit auch ein steuerbarer Strahlteiler möglich.

In anderen Worten liegt eine Anwendung der beschriebenen Technik im Bereich von pixelorientierten reflektierenden und/oder transmittierenden Displays vor (die auch als spatial light modulator bekannt sind). Dargestellt ist beispielsweise eine 3x3 Matrix von Pixeln bzw. die Ansteuerungselektroden, wobei hier die Pixel 1 bis 5 geschaltet werden. Im konventionellen Fall gemäß Fig. 4c wird herstellungsbedingt aufgrund der getrennten Elektroden und das aktive Material jedes Pixel von einem transparenten Rand umgeben. Gemäß Fig. 4d wird das aktive Material durchgezogen. Daher werden die elektrochromen Moleküle auch noch im Zwischenbereich geschaltet. Es ergeben sich keine transparenten Spalte mehr, sondern die Fläche des Displays kann vollständig zwischen den Elektroden geschaltet werden.

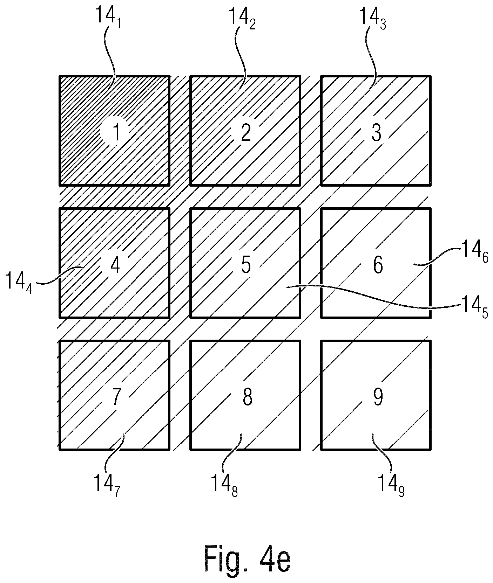

Obwohl Fig. 4d so gezeigt ist, dass die Teilbereiche 14₁ bis 14₅ geschaltet sind und die weiteren Teilberieche 14₆ bis 14₉ nicht geschaltet sind, kann anders als in einer derartigen binären Konfiguration auch eine kontinuierliche Variation in der Absorptionseigenschaft eingestellt werden, wie es anhand der Fig. 4e näher beschrieben ist.

Fig. 4e zeigt eine schematische Aufsicht auf die Elektrodenkonfiguration gemäß Fig. 4d, die bspw. als Gradientenfilter betrieben wird. So kann bspw. in dem Teilbereich 14₁ eine erste, ggf. maximale Absorption erzeugt werden. Für die erste Absorption kann an den Teilbereich 14₁ ein erstes, ggf. größtes elektrisches Potential angelegt sein. An benachbarte Teilbereiche 14₂, und 14₄ kann ein zweites, geringeres Potential angelegt sein, um eine geringere Absorption in den Teilbereichen 14₂ und 14₄ zu erhalten. Hierdurch kann ein kontinuierlicher Verlauf zwischen dem ersten Absorptionsgrad und dem zweiten Absorptionsgrad erhalten werden. Ein dritter Absorptionsgrad kann in den Teilbereichen 14₃, 14₅ und 14₇ erhalten werden, indem in diesen Teilbereichen bspw. ein drittes Potential angelegt wird. Ein viertes Potential, bspw. ein minimales Potential oder ein Potential zum Deaktivieren der Absorptionseigenschaft kann im Teilbereich 14₉ zur Transparenz oder Reflexion führen. Wird eine Gerade zwischen Flächenschwerpunkten der Teilbereiche 14₁ und 14s betrachtet, so kann sich zwischen zwei benachbarten ggf. diskontinuierlichen Potentialen ein kontinuierlicher Übergang der Absorptionseigenschaft einstellen. Dies ermöglicht die Verwendung der Vorrichtung als Gradientenfilter.

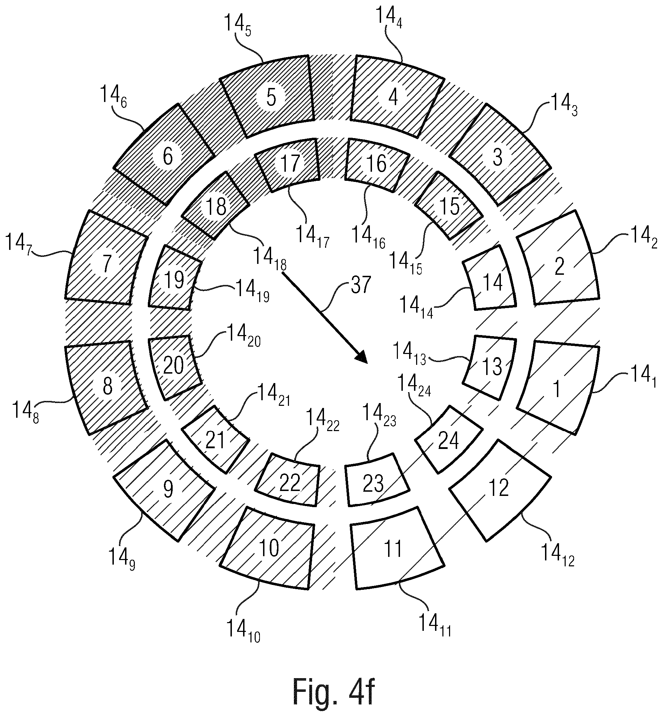

Fig. 4f zeigt eine schematische Aufsicht auf eine Konfiguration der Elektrode 14, die in bspw. zwei konzentrische Kreise mit jeweils exemplarisch 12 Kreissegmente 14₁ bis 14₁₂ und 14₁₃ bis 14₂₄ aufgeteilt ist, wobei die Teilbereiche 14, bis 14₂₄ individuell ansteuerbar sind. Fig. 4f zeigt einen beispielhaften Schaltzustand der Elektroden, zum Ausbilden eines Gradienten 37 zwischen Teilbereichen 14₅, 14₆ und 14₇ maximaler Absorption und Teilbereichen 14₁, 14₁₁ und 14₁₂ minimaler Absorption, wobei durch entsprechende Ansteuerung der dazwischenliegenden Teilbereiche ein Gradientenverlauf der Absorptionseigenschaft entlang des Gradienten 37 erhalten werden kann. Gemäß weiteren Ausführungsbeispielen sind die Teilbereiche in einem oder als zwei Ring-Mustern angeordnet (bspw. 3, 4, 5 oder mehr), die möglicherweise konzentrisch sind. Die Teilbereiche können für den Erhalt einer hohen Symmetrie in unterschiedlichen Ringen geometrisch ähnlich sein und/oder innerhalb eines Rings eine identische Fläche aufweisen, dies ist jedoch nicht erforderlich. Gemäß weiteren Ausführungsbeispielen wird die Elektrode 14 in beliebige Teilbereiche unterteilt.

In anderen Worten zeigen die Fig. 4d bis Fig. 4f Darstellungen von Pixel-Bauelementen, die gemäß Ausführungsbeispielen als Gradientenfilter betrieben werden können. Die Absorption jedes einzelnen Pixels (gesteuert durch zumindest einen Teilbereich) kann analog gesteuert werden. Wird bspw. die Spannung in zumindest einer Wunschrichtung, etwa entlang des Gradienten 37, von Pixel zu Pixel reduziert, so kann ein optisches Gradientenfilter erhalten werden, das die erfindungsgemäße Idee nutzt, dass ein Zwischenraum zwischen jeweils zwei benachbarten Pixeln auch gefärbt wird und zwar auf Grund des räumlichen Gradienten. Bei der Einstellung zweier oder mehrerer Wunschrichtungen kann ein komplexes Gradientenfeld eingestellt werden. Obwohl rechteckige Pixel bekannt und implementierbar sind, können die Pixel durch zusätzliche Segmentierung von andersgeformten Elektroden, etwa Ringelektroden erhalten werden. Dies ermöglicht die Kombination aus Iris und Gradientenfilter. In Figur 4f ist die variierende Färbung über die Pixelfläche vereinfacht dargestellt. Obwohl die Schattierung so dargestellt ist, dass sie über einen Teilbereich 14ᵢ hinweg veränderlich ist, kann die Färbung/Absorption über jedes Pixel/Teilbereich gesehen nahezu konstant sein.

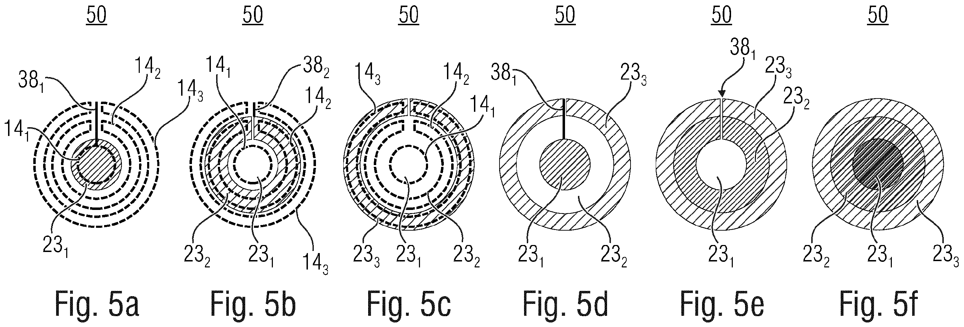

Die Fig. 5a bis 5f zeigen schematische Aufsichten auf eine Vorrichtung 50 gemäß einem Ausführungsbeispiel, die als elektrochrome Iris mit drei Elektrodenbereichen 14₁ bis 14₃ der Elektrode 14 gebildet ist, die individuell ansteuerbar sind. Dadurch ergeben sich drei Teilbereiche 23₁ bis 23₃ des aktiven Materials, in welchen die Absorptionseigenschaft individuell steuerbar ist. Dabei kann ein entsprechend ausgestalteter Elektrodenbereich 14, beispielsweise einen runden inneren Teilbereich 23₁ bilden, welcher vom Elektrodenbereich 14₂ und einem damit angesteuerten Teilbereich 23₂ umschlossen wird. Der Elektrodenbereich 14₂ wird beispielsweise vom Elektrodenbereich 14₃ umschlossen, so dass der Teilbereich 23₃ ebenfalls den Teilbereich 23₂ umschließt. Die Elektrodenbereiche 14₂ und 14₃ sind beispielsweise ringförmig gebildet und lediglich an den Stellen unterbrochen, an denen Zuleitungen 38₁ und/oder 38₂ von einem Randbereich hin zu dem jeweils elektrisch versorgten Elektrodenbereich 14₁ bzw. 14₂ verlaufen. Das bedeutet, der Elektrodenbereich 14₁ ist mit einem elektrisch leitfähigen Element 38₁ verbunden, welches als Teil des Elektrodenbereichs verstanden werden kann. Ebenso ist der Elektrodenbereich 14₂ über die Leitung 38₂ elektrisch kontaktierbar. Eine Kontaktierung ist bspw. über die Via-throughs möglich, wie es bspw. im Zusammenhang mit den Fig. 3c und 3d beschrieben ist.

Die Fig. 5a bis 5f zeigen nun unterschiedliche Schaltzustände, wobei in Fig. 5a lediglich der innere Teilbereich 23₁ geschaltet ist, beispielsweise durch eine Aktivierung, so dass das aktive Material Licht absorbiert oder, alternativ, durch eine Deaktivierung des aktiven Materials.

In Fig. 5b ist ein Schaltzustand dargestellt, in welchem lediglich der Teilbereich 23₂ absorbiert.

Fig. 5c zeigt eine schematische Aufsicht auf die Vorrichtung 50 in einem Zustand, in welchem lediglich der Teilbereich 23₃ absorbiert.

Fig. 5d zeigt eine schematische Aufsicht auf die Vorrichtung 50, bei der die Teilbereiche 23, und 23₃ absorbieren, während der dazwischenliegende Elektrodenbereich 14₂ bspw. inaktiv ist, so dass der Teilbereich 23₂ möglicherweise transparent ist.

Fig. 5e zeigt eine schematische Aufsicht auf die Vorrichtung 50, bei der der innere Teilbereich 23₁ transparent ist, während die Teilbereiche 23₂ und 23₃ absorbieren. Ist der Teilbereich 23₁ transparent kann auch das aktive Material, welches die Leitung 38₁ bedeckt, transparent sein, so dass die Leitung 38₁ als transparenter Streifen erkennbar ist. Ein derartiger Einfluss kann bspw. durch Weiterbildungen gemäß den Fig. 3c und 3d zumindest teilweise behoben werden.

Fig. 5f zeigt eine schematische Aufsicht auf die Vorrichtung 50 in einem Schaltzustand, in welchem die Teilbereiche 23₁, 23₂ und 23₃ absorbieren. Ebenso wie in Fig. 5e wird deutlich, dass bei einer Absorption benachbarter Teilbereiche 23 ein Auftreten einer transparenten Linie in Zwischenbereichen, wie es beispielsweise in Fig. 10c erkennbar ist und wo in den Zwischenbereichen kein aktives Material angeordnet ist, verhindert ist. Dies wird dadurch erhalten, dass das aktive Material homogen und somit unstrukturiert aufgetragen werden kann. Bezogen auf die Vorrichtung 50 ist die erfindungsgemäße Idee derart implementiert, dass zwar die TCO-Schichten so strukturiert werden, dass sie ringförmige Blendenstufen bereitstellen, jedoch das aktive Material als homogene Schicht ausgeführt wird. Damit werden die technischen Strukturierungsprobleme des aktiven Materials umgangen.

Wird nun eine Blendenstufe geschaltet, so kann durch Diffusion der Ladungsträger durch die durchgehende Schicht des aktiven Materials hindurch eine Färbung auch im Bereich benachbarter, nicht geschalteter Blenden auftreten. Um dies zu reduzieren oder zu vermeiden, kann zusätzlich an den nicht-geschalteten Elektroden ein Potential angelegt werden, so dass diese Schichten transparent bleiben. Werden mehrere Blenden nebeneinander geschaltet, so wirken alle Elektroden wie eine Äquipotentialfläche und das aktive Material kann auch im Spaltbereich geschaltet werden, obgleich sich unter der Schicht des aktiven Materials keine TCO-Schicht (Elektrode) befindet.

In anderen Worten zeigen die Fig. 5a bis 5f die technische Umsetzung der vorliegenden Erfindung in einer dreistufigen Iris. In den linken drei Bildern (Fig. 5a bis 5c) wird jeweils nur eine Blendenstufe geschaltet, beim vierten Bild (Fig. 5d) Stufen 1 und 3, beim fünften Bild (Fig. 5e) Stufen 2 und 3 ohne transparenten Spalt und schließlich beim sechsten Bild (Fig. 5f) alle drei Stufen ohne transparente Spalte. Die Fig. 5a bis 5f zeigen die dreistufige Iris mit allen möglichen Schaltzuständen. Hervorzuheben ist, dass in den Fig. 5e und 5f zwischen den Blendenstufen kein transparenter Spalt auftritt. Das aktive Material kann TiO₂-Nanopartikel mit elektrochromen Viologenderivatmoleküle angeordnet auf ITO als TCO-Schicht aufweisen. Alternativ oder zusätzlich können auch weitere Materialen angeordnet sein, etwa Antimon-Zinn-Oxid (ATO) oder Cer-Oxid (CeO), beschichtete Materialien, etwa beschichtete ATO-Partikel oder dergleichen. Erfindungsgemäße Ausführungsbeispiele ermöglichen somit die Vermeidung der Strukturierung der aktiven Schicht. Dadurch, dass eine Mikrostrukturierung der aktiven Schicht nicht erforderlich ist, resultiert eine Vermeidung der spaltförmigen nicht-schaltbaren Bereiche zwischen den Blendenstufen. Dies ermöglicht die Vermeidung des aufwendigen Strukturierungsprozesses der aktiven Schicht.

Die vorliegende Erfindung hebt sich dadurch von bekannten Konzepten deutlich ab. Insbesondere unter dem Verweis auf die US 9,759,984 B1, wo gefordert ist, dass eine elektrische Isolierung zwischen zwei Bereichen einer Elektrode erhalten wird, wird vorliegend ein elektrisch leitfähiges, aktives Material verwendet, welches einen Ladungsträgerfluss zulässt. Dies ist die Grundlage dafür, dass sich die optische Eigenschaft auch in den Zwischenbereichen ändern lässt. Das bedeutet, dass hierin beschriebene Vorrichtungen ausgebildet sind, um die optische Eigenschaft in dem Zwischenbereich basierend auf der benachbart hierzu anliegenden Potentialdifferenz zu ändern. Insbesondere sind die Vorrichtungen ausgebildet, um die optische Eigenschaft im gesamten Zwischenbereich, d. h., einem Gesamtbereich oder über die gesamte Erstreckung zwischen den Elektroden zu verändern.

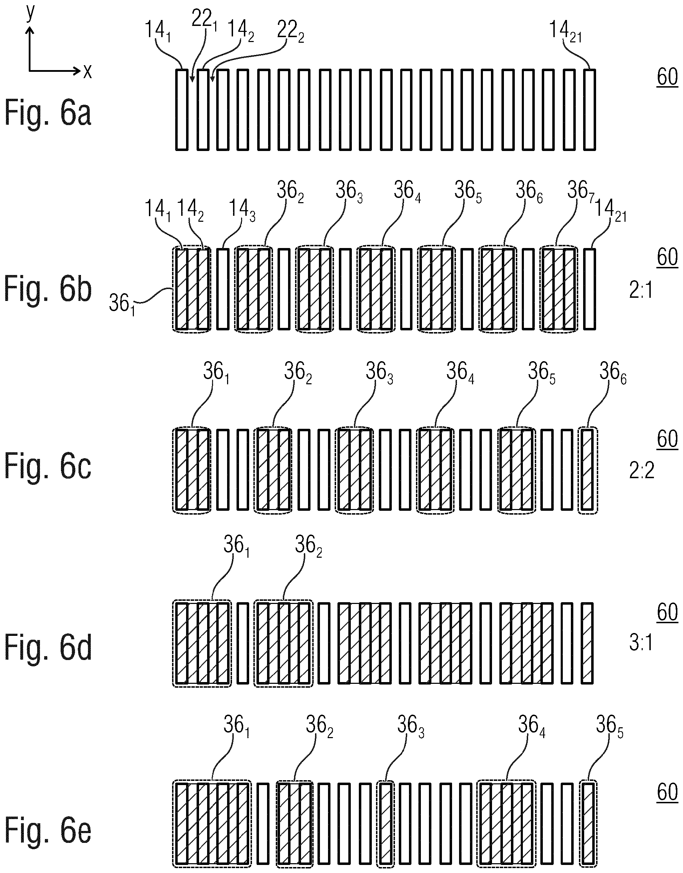

Die Fig. 6a bis 6e zeigen schematische Aufsichten auf eine Vorrichtung 60 gemäß einem Ausführungsbeispiel, bei dem die Vorrichtung 60 bzw. die strukturierte Elektrode als Balkenstruktur mit einer Vielzahl von Balken gebildet ist. Beispielsweise weist die Vorrichtung 60 zwei, drei, vier oder eine höhere Anzahl, etwa 21, Elektrodenbereiche 14, bis 14₂₁ auf, die jeweils als nebeneinander angeordnete Balken gebildet sind, das bedeutet, eine Ausdehnung entlang einer ersten lateralen Richtung, etwa y, ist zumindest das 2-Fache, das 5-Fache oder das 10-Fache einer Abmessung entlang einer lateralen Richtung senkrecht hierzu, beispielsweise x. Obwohl die Vorrichtung 60 so dargestellt ist, dass die Elektrodenbereiche 14, bis 14₂₁ einzeilig, das bedeutet, exakt eine Zeile aufweisend, angeordnet sind, können auch eine höhere Anzahl von Zeilen implementiert werden, etwa zwei, drei oder mehrere Zeilen. Dies kann auch so verstanden werden, dass die Pixelstruktur aus Fig. 4d mit Balkenstrukturen implementierbar ist. Jeder der Elektrodenbereiche 14₁ bis 14₂₁ kann somit einen schaltbaren Balken definieren. Nicht gezeigt ist das aktive Material, welches sich über die Elektrodenbereiche und die Zwischenbereiche erstreckt.

Fig. 6a zeigt die Vorrichtung 60 in einem Zustand, in welchem das aktive Material benachbart zu sämtlichen Elektrodenbereichen 14, bis 14₂₁ farblos ist, beispielsweise deaktiviert oder inaktiv. Die Vorrichtung 60 kann beispielsweise zur Implementierung eines Kalibrierstandards verwendet werden und ist beispielsweise für den Kalibrierstandard USAF51 geeignet. Das bedeutet, die Vorrichtung 60 kann ein einstellbares schaltbares USAF51 Target sein. USAF51 ist ein optischer Transmissionsstandard. Er trägt auf einem transparenten Glasträger Gruppen von schwarzen Balken verschiedener Breite und somit Raumfrequenzen. Werden diese mit dem zu untersuchenden Objektiv abgebildet, so kann aus den Kontrastkurven der abgebildeten Balken verschiedener Breite die Modulationstransferfunktion und somit die Abbildungsqualität des Objektivs ermittelt werden. Hier besteht eine Anwendung der vorliegenden Ausführungsbeispiele darin, viele gleichbreite balkenförmige Elektroden (in Form der balkenförmig strukturierten TCO-Schicht, Elektrode 14) nebeneinanderzulegen und dann alle Balkenelektroden mit einer durchgehenden NPS-Schicht abzudecken. Wie es in den Fig. 6b bis 6e gezeigt ist, kann durch eine geeignete elektrische Ansteuerung der einzelnen Balken auch ein benachbarter Balken geschaltet werden. Da dabei gleichzeitig auch die Spalte zwischen den Balken, d. h. die Zwischenbereiche, geschaltet werden, kann somit die nach außen sichtbare Balkenbreite zwischen einer Elektrode bis hin zu n Elektroden aktiv variiert werden, wobei n die maximale Anzahl der vorhandenen Elektroden ist, vorliegend beispielsweise 21. Werden gleichbreite geschaltete Balkengruppen periodisch entlang der Elektrodenkette wiederholt, so kann das Target des USAF51-Standards platzsparend auf eine kleine Fläche reduziert realisiert werden, indem nacheinander verschiedene Balkenbreiten geschaltet und abgebildet werden. Das bedeutet, die Balken sind zeitlich veränderlich, es können verschieden breite Balkengruppen aktiv geschalten werden, während das Target für den USAF51-Standard alle Balkengruppen als Absorber aufweist und somit eine große Fläche benötigt. Damit kann ein aktives Bauteil als Kalibrierstandard für ein Objektiv oder ein anderes optisches Bauteil integriert werden, um eine in-situ Kalibrierung durchzuführen. Die geringe räumliche Ausdehnung in Kombination mit der steuerbaren Transparenz ermöglicht eine integrierbare Ausgestaltung der Vorrichtung. Derartige Herangehensweisen erforderten bislang immer ein großflächiges Substrat, welches alle Balkengruppen der verschiedenen Ortsfrequenzen aufnehmen muss. Ausführungsbeispiele ermöglichen eine zeitlich veränderliche Darstellung von Raumfrequenzen auf einer Fläche, so dass ein Target entsprechend raumsparend implementierbar ist.

Obwohl die Fig. 6b bis 6d eine periodische Anordnung der aktiv geschalteten Balken zeigen, lassen sich auch wie in 6e dargestellt nicht-periodische Strukturen entlang der Kette/Zeile aktiv einstellen. Obwohl eine Ausdehnung der Balken entlang der x-Richtung und der y-Richtung für die Elektrodenbereiche 14, bis 14₂₁ gleich dargestellt ist, können gemäß anderen Ausführungsbeispielen auch voneinander verschiedene Ausdehnungen implementiert werden, insbesondere entlang der x-Richtung. Beispielsweise könnte eine variierende und/oder logarithmische Ausdehnung der Elektrodenbereiche 14₁ bis 14₂₁ gewählt werden. Die Balken können auch auf einem Kreis, oder in einer anderen Geometrie angeordnet sein. Ausführungsbeispiele sehen Gradientenfilter vor, die eine beschriebene Balkenstruktur aufweisen und genutzt werden, etwa zur Kontrolle des räumlichen Gradientenverlaufs.

Fig. 6b zeigt die Vorrichtung 60 in einem Zustand, in welchem ein 2:1-Zustand geschaltet ist, das bedeutet, jeweils zwei benachbarte Elektrodenbereiche werden aktiv geschaltet, beispielsweise die Elektrodenbereiche 14₁ und 14₂, während ein danach folgender Elektrodenbereich, beispielsweise der Teilbereich 14₃ ungeschaltet bleibt.

Fig. 6c zeigt eine schematische Aufsicht auf die Vorrichtung 60, die in einer 2:2-Konfiguration geschaltet ist, das bedeutet, zwischen zwei benachbarten und gleichzeitig aktiv geschalteten und so einen zusammenhängenden Absorptionsbereich 36 bildenden Elektrodenbereichen ist lediglich ein Zwischenbereich angeordnet, während zwischen zwei benachbarten Absorptionsbereichen, beispielsweise den Absorptionsbereichen 36₁ und 36₂ eine entsprechende Anzahl von inaktiven Elektrodenbereichen angeordnet ist.

Fig. 6d zeigt eine schematische Aufsicht auf die Vorrichtung 60 in einer 3:1-Konfiguration, bei der die Absorptionsbereiche 36 jeweils drei Elektrodenbereiche aufweisen und durch lediglich einen inaktiven Elektrodenbereich voneinander beabstandet sind. Basierend auf einer Anzahl der insgesamt verfügbaren Elektrodenbereiche kann es bei einer derartigen Konfiguration, wie es auch in Fig. 6b, Fig. 6c und Fig. 6e gezeigt ist, vorkommen, dass einer oder mehrere Absorptionsbereiche eine andere Größe aufweisen.

Fig. 6e zeigt eine schematische Aufsicht auf die Vorrichtung 60 mit einem aperiodisch geschalteten Muster, das bedeutet, Absorptionsbereiche 36₁ bis 36₅ können eine beliebige Anzahl von Elektrodenbereichen aufweisen. Da beim Schalten von benachbarten Elektrodenbereichen innerhalb eines Absorptionsbereichs 36 gleichzeitig auch die Spalte zwischen ihnen geschaltet werden, kann somit die nach außen sichtbare Balkenbreite zwischen einer Elektrode auf bis zu n Elektroden aktiv variiert werden, wie es ausgeführt ist.

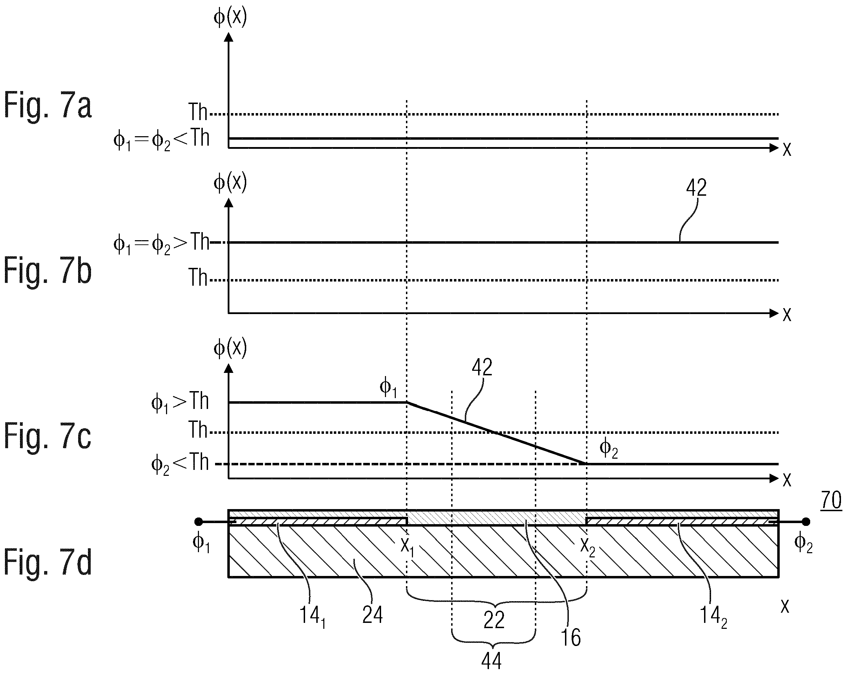

Die Fig. 7a bis 7c zeigen schematische Graphen von Potentialverläufen innerhalb einer in Fig. 7d in einer schematischen Seitenschnittansicht gezeigten Vorrichtung 70 gemäß einem Ausführungsbeispiel. Die Darstellung gemäß der Fig. 7d umfasst der Einfachheit halber nicht die Elektrode 12, so dass lediglich die an dem Substrat 24 angeordneten Elektrodenbereiche 14_{1'} und 14₂ dargestellt sind, die von dem aktiven Material 16 bedeckt sind und bei der das aktive Material 16 ferner in dem Zwischenbereich 22 angeordnet ist. An den Elektrodenbereich 14, ist ein Potential Φ₁ anlegbar, während an den Elektrodenbereich 14₂ ein Potential Φ₂ anlegbar ist.

Gemäß Fig. 7a sind die Potentiale Φ₁ und Φ₂ jeweils so gewählt, dass das aktive Material inaktiv ist. Dies kann durch Einstellen einer Potentialdifferenz zwischen einem Potential der Arbeitselektrode und der Gegenelektrode derart erfolgen, dass eine elektrische Spannung unterhalb einer Schwellenspannung Th erhalten wird, hierfür kann das Potential Φ₁ und Φ₂ an das aktive Material angepasst sein. Das aktive Material 16 wird über die gesamte laterale Erstreckung x inaktiv sein, beispielsweise farblos. Alternativ oder zusätzlich können Materialien verwendet werden, die bei diesem Potential aktiv, d. h., absorbierend sein können.

Gemäß Fig. 7b werden die Potentiale Φ₁ und Φ₂ beispielhaft gleichgewählt und jeweils so gewählt, dass sie größer sind als eine Schwelle Th bspw. ein Redox-Potential. Oberhalb des Schwellenpotentials Th ändert das aktive Material seine Absorptionseigenschaft, etwa indem es sich verfärbt und/oder seine Transparenz ändert. Es wird deutlich, dass dieser Zustand im lateralen Verlauf x der Elektrodenbereiche 14₁ und 14₂ erhalten wird. In dem Zwischenbereich 22 ergibt sich das gleiche Potential und somit auch der gleiche Zustand wie auf den beiden Elektroden.

Gemäß der Konfiguration in Fig 7c sind die Potentiale Φ₁ und Φ₂ sowohl unterschiedlich gewählt als auch so gewählt, dass das Potential Φ₁ oberhalb des Schwellenpotentials ist und das Potential Φ₂ unterhalb des Schwellenpotentials. Im Bereich des Elektrodenbereichs 14, wird das aktive Material 16 deshalb die aktive Konfiguration aufweisen und im Bereich des Elektrodenbereichs 14₂ die inaktive Konfiguration. In dem Zwischenbereich 22 kommt es zu einem Potentialabfall, wie es durch die Kurve 42 schematisch angedeutet ist. Bei Unterschreiten des anliegenden oder vorherrschenden Potentials unterhalb des Schwellenpotentials Th, verändert das aktive Material 16 über den lateralen Verlauf x seinen Zustand von aktiv zu inaktiv.

Die Potentiale Φ₁ und Φ₂ gemäß Fig. 7b und/oder gemäß Fig. 7c kann materialabhängig sein und beispielsweise einen Wert in einem Bereich von zumindest -5 V und höchstens +5 V, zumindest -3 V und höchstens +3 V oder zumindest -1 V und höchstens +1 V aufweisen, beispielsweise 2 V oder 0.1 V.

Benachbart zu einem Ort x, an dem die Kurve 42 innerhalb eines Toleranzbereichs von ±5 %, ±10 % oder ±20 % im Bereich des Schwellenpotentials Th liegt, kann das aktive Material 16 einen Übergangsbereich 44 ausbilden, in welchem das aktive Material 16 lediglich teilweise eingefärbt ist, so dass hier für den Betrachter eine optische Unschärfe in Form eines räumlichen Absorptionsgradienten erkennbar sein kann. Die Grenze 25 aus Fig. 1a kann in dem Übergangsbereich 44 angeordnet sein. Unter Bezugnahme auf Fig. 7c, je grö-ßer der Unterschied zwischen den Potentialen Φ₁ und Φ₂ ist, desto kleiner kann der Übergangsbereich 44 ausfallen, was vom Betrachter als zunehmend optisch scharf wahrgenommen werden kann. Das bedeutet, dass die ausgebildete Schicht des aktiven Materials 16 ausgebildet sein kann, um bei einer Potentialdifferenz zwischen dem ersten Elektrodenbereich 14₁ und der Elektrode 12 und einer zweiten Potentialdifferenz zwischen dem Elektrodenbereich 14₂ und der Elektrode 12 den Übergangsbereich 44 auszubilden, in welchem die Absorptionseigenschaft von einem der möglichen Zustände, etwa transparent oder opak/farbig, in einen anderen möglichen Absorptionszustand, beispielsweise opak/farbig bzw. transparent wechselt. Ein derartiger Wechsel kann binär im Sinne von EIN/AUS erfolgen, kann aber innerhalb eines Steuerbereichs auch mehrstufig und/oder kontinuierlich erfolgen, so dass eine Mehrzahl (zumindest zwei) oder eine Vielzahl (bspw. zumindest drei, zumindest vier, zumindest 5 oder mehr, etwa zumindest 10) Absorptionszustände einstellbar sein können.

Sowohl in der Konfiguration gemäß Fig. 7a als auch in der Konfiguration gemäß 7b werden bei gleichen Potentialdifferenzen gleiche Zustände sowohl im Bereich der Elektrodenbereiche 14₁ und 14₂ sowie des Zwischenbereichs 22 erhalten, nämlich im inaktiven Zustand gemäß Fig. 7a als auch im aktiven Zustand gemäß Fig. 7b. In beiden Fällen weist das aktive Material 16 über den lateralen Verlauf x eine homogene Absorptionseigenschaft über den ersten Elektrodenbereich, den Zwischenbereich und den zweiten Elektrodenbereich hinweg auf.

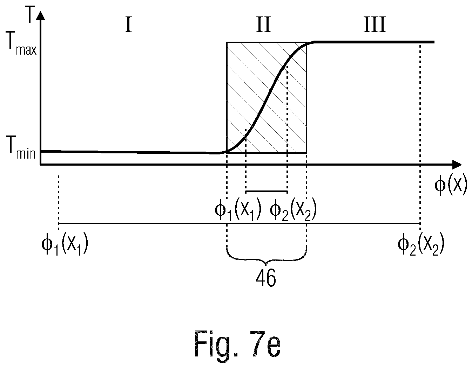

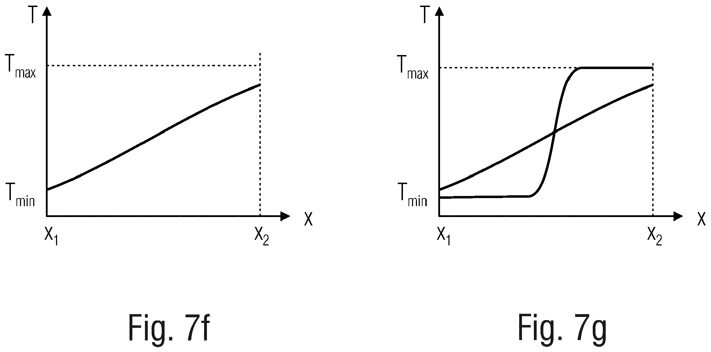

Fig. 7e zeigt einen schematischen Graphen einer möglichen Variation einer Absorptionseigenschaft T über das am Ort x anliegende Potential Φ(x), was in den Fig. 7a bis 7c an der Ordinate des jeweiligen Graphen dargestellt ist. Die in Fig. 7c dargestellte Konfiguration, gemäß derer in dem Zwischenbereich 22 zwischen den Elektroden 14₁ und 14₂, der von der relativ hochohmigen Nanopartikelschicht 16 überdeckt wird, kann so angesteuert werden, dass zwischen den Elektroden 14₁ und 14₂ eine elektrochemisch wirksame Potentialdifferenz (elektrische Spannung) anliegen kann. Diese führt zu der optischen Absorptionsänderung, die in Fig. 7e dargestellt ist. T bedeutet beispielsweise einen Transmissionsgrad, so dass Tₘᵢₙ einen gefärbten oder absorbierenden Zustand und Tₘₐₓ einen komplementären Zustand, bspw. transparent, bedeuten kann. Der größte Absorptionshub kann sich aufgrund der verwendeten elektrochromen Moleküle (inklusive aktivem Material und gegebenenfalls Elektrolyt) in einem bestimmten elektrochemischen Potentialbereich 46 ergeben, der auch als Bereich II dargestellt ist. Wird zwischen den Orten x₁ und x₂ in Fig. 7d nur eine geringe Potentialdifferenz angelegt, so ergibt sich, wie in Fig. 7f dargestellt, ein breiter Übergangsbereich der Absorption zwischen den Elektroden. Das Irissegment, Balkenelement oder dergleichen könnte unscharf begrenzt erscheinen, da sich eine große Breite des Bereichs 44 ergeben könnte. Wird jedoch, wie in Fig. 7g dargestellt, die maximal erlaubte Potentialdifferenz zwischen x₁ und x₂ angelegt, so kann sich die Transmissionskurve aus Fig. 7e auf eine minimale Breite zusammenschieben. Der Rand des geschalteten Segments erscheint ausreichend scharf. Das bedeutet, gemäß Fig. 7g erfolgt ein Betrieb mit einer maximal zulässigen Spannungsdifferenz. Hierfür kann eine Potentialdifferenz angelegt werden, die in dem Bereich des Redoxpotentials liegt, so dass eine Potentialdifferenz von zumindest - 1500 mV und höchstens +1500mV um ein Redoxpotential des aktiven Materials erhalten wird etwa in einem Bereich von ±1500 mV, ±1000 mV oder ±500 mV um das Redoxpotential.

Sind die beiden Potentiale identisch, so ergibt sich auf den Elektroden und dem Übergangsbereich die gleiche Färbung, die je nach Potential zwischen Tₘᵢₙ und Tₘₐₓ liegt. Somit kann auch ein Neutralfilter (alle Segmente geschaltet) realisiert werden oder ein Fourier-Filter (es werden nur spezifische Segmente geschaltet).

Eine zunehmend große Potentialdifferenz zwischen Φ₁ und Φ₂ ermöglicht einen zunehmend steileren Verlauf des Potentialabfalls in der Kurve 42 (Fig. 7c), so dass ein Zwischenbereich, innerhalb dessen das aktive Material vom aktiven zum inaktiven Zustand wechselt, entlang des lateralen Verlaufs x eine geringe Ausdehnung aufweist (Fig. 7e), was sich in einem steilen Verlauf der Transmission wiederspiegelt. Wird dagegen eine kleine Potentialdifferenz eingestellt, so erhält man einen deutlich breiteren Verlauf der Transmission (Fig. 7f). Anders ausgedrückt: Unter Bezugnahme auf Fig. 7c, je größer der Unterschied zwischen den Potentialen Φ₁ und Φ₂ ist, desto kleiner kann der Übergangsbereich 44 ausfallen, was vom Betrachter als zunehmend optisch scharf wahrgenommen werden kann.

Ein räumlicher Verlauf zwischen einem ersten optischen Zustand, etwa einem Absorptionsgrad und einem zweiten optischen Zustand bzw. Absorptionsgrad kann über einen räumlichen Verlauf der entsprechenden Potentialdifferenzen eingestellt werden. Es wird nochmals darauf hingewiesen, dass auch andere optische Eigenschaften über den räumlichen Verlauf verändert werden können. Wird bspw. die Ansteuerung gemäß Fig. 4d betrachtet, so kann der Übergang von einem maximalen Absorptionsgrad hin zu einem minimalen Absorptionsgrad zwischen zwei Elektrodenteilbereichen liegen und räumlich entsprechend begrenzt sein, indem die hierfür verwendeten minimalen und maximalen Potentiale bei benachbarten Teilbereichen angelegt werden. Alternativ kann sich, wie in Fig. 4e dargestellt, der Übergang auch über mehrere Teilbereiche hinweg vom Teilbereich 14₁ zum Teilbereich 14₉ erstrecken. Ähnliches gilt für benachbarte Balken in den Fig. 6a-6d.

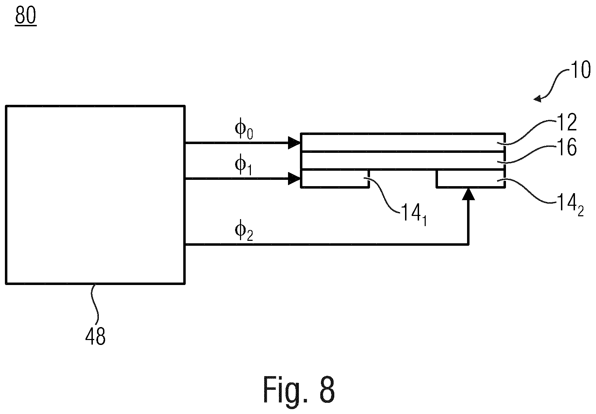

Fig. 8 zeigt ein schematisches Blockschaltbild eines Systems 80 gemäß eines Ausführungsbeispiels, das die Vorrichtung 10 umfasst und das ferner eine Ansteuereinrichtung 48 umfasst, die mit der Vorrichtung 10 elektrisch verbunden ist und ausgebildet ist, um elektrische Potentiale an die Elektroden 12, 14, und 14₂ anzulegen. Alternativ oder zusätzlich zu der Vorrichtung 10 kann auch eine andere hierin beschriebene Vorrichtung angeordnet sein, etwa die Vorrichtung 20, 30, 40, 50, 60 und/oder 70. Die Ansteuereinrichtung 48 kann ausgebildet sein, um gleichzeitig ein Bezugspotential (Φ₀), etwa 0 V, Masse oder dergleichen an die Elektrode 12 anzulegen Beispielsweise kann die Ansteuereinrichtung 48 die Potentiale Φ₁ und Φ₂ der Konfiguration gemäß Fig. 7c an die Elektroden 14₁ und 14₂ anlegen. Jedes der Potentiale Φ₁ und Φ₂ kann oberhalb oder unterhalb des Schwellenpotentials liegen, wie es im Zusammenhang mit der Fig. 7c beschrieben ist.

Die Ansteuereinrichtung 48 kann ausgebildet sein, um die Potentiale Φ₁ und Φ₂ so anzulegen, dass ein Übergang zwischen dem ersten optischen Zustand in einem Bereich des ersten Elektrodenbereichs 14, und einem zweiten optischen Zustand in einem Bereich des zweiten Elektrodenbereichs 14₂ in dem Übergangsbereich 44 erfolgt, wobei der Übergangsbereich eine Abmessung von höchstens 5 µm ±50 %, bevorzugt weniger aufweist. Dies kann erhalten werden, indem eine möglichst hohe Potentialdifferenz Φ₁ - Φ₂ angelegt wird. Bevorzugt legt die Ansteuereinrichtung die Potentiale dabei so an, dass ein zuverlässiger Dauerbetrieb erhalten bleibt. Dies kann beispielsweise dadurch erhalten werden, dass innerhalb eines Toleranzbereichs von ±20 % ein maximales elektrisches Potential des aktiven Materials 16 angelegt wird.

Die Ansteuereinrichtung kann ausgebildet sein, um die Vorrichtung als Gradientenfilter zu betreiben, etwa indem die Schaltungszustände der Fig. 4e und/oder Fig. 4f eingestellt werden.

Ein erfindungsgemäßes Verfahren zum Bereitstellen einer Vorrichtung gemäß einem Ausführungsbeispiel umfasst ein Anordnen einer ersten Elektrode und ein Anordnen des aktiven Materials, so dass das aktive Material ausgebildet ist, um basierend auf einer elektrischen Potentialdifferenz zwischen der ersten Elektrode und einer zweiten Elektrode die Absorptionseigenschaft zu verändern. Das Verfahren umfasst ein Anordnen einer zweiten Elektrode, so dass das aktive Material zwischen der ersten Elektrode und der zweiten Elektrode angeordnet ist. Die zweite Elektrode wird so angeordnet, dass sie eine Strukturierung in zumindest einen ersten Elektrodenbereich und einen zweiten Elektrodenbereich aufweist. Zwischen dem ersten Elektrodenbereich und dem zweiten Elektrodenbereich ist ein Zwischenbereich angeordnet, so dass das aktive Material zwischen der ersten Elektrode und der zweiten Elektrode angeordnet ist und eine zusammenhängende Schicht bildet, die zumindest einen Teilbereich des ersten Elektrodenbereichs und einen Teilbereich des zweiten Elektrodenbereichs bedeckt und in dem Zwischenbereich angeordnet ist.

Gemäß einem Ausführungsbeispiel wird das aktive Material mittels eines Druckverfahrens angeordnet. Alternativ oder zusätzlich kann auch ein Rakelverfahren angewendet werden. Das bedeutet, dass das aktive Material eine zusammenhängende Schicht bildet, die fest oder hochviskos sein kann, was sich ebenfalls von in einer Flüssigkeit, die in LCD verwendet werden, abgrenzt. Gemäß hierin beschriebenen Ausführungsbeispielen können der Elektrolyt und das aktive Material in unterschiedlichen oder von einander verschiedenen einen gemeinsamen Grenz- oder Kontaktbereich aufweisenden Schichten angeordnet sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10; 20; 30; 40; 50; 60; 70) zum bereichsweisen Ändern einer optischen Eigenschaft (T) mit:
einer Gegenelektrode (12);
einer Arbeitselektrode (14), die eine Strukturierung in zumindest einen ersten Elektrodenbereich (14₁) und einen zweiten Elektrodenbereich (14₂) aufweist, wobei zwischen dem ersten Elektrodenbereich (14₁) und dem zweiten Elektrodenbereich (14₂) ein Zwischenbereich (22) angeordnet ist;
einem aktiven Material (16) das zwischen der Gegenelektrode (12) und der Arbeitselektrode (14) angeordnet ist, und das ausgebildet ist, um basierend auf einer elektrischen Potentialdifferenz (U₁, U₂) zwischen der Gegenelektrode (12) und der Arbeitselektrode (14) die optische Eigenschaft (T) zu verändern;
wobei das aktive Material (16) eine zusammenhängende Schicht bildet, die zumindest einen Teilbereich (18₁) des ersten Elektrodenbereichs (14₁) und einen Teilbereich (18₂) des zweiten Elektrodenbereichs (14₂) bedeckt und in dem Zwischenbereich (22) angeordnet ist;
dadurch charakterisiert, dass
das aktive Material (16) elektrisch leitfähig und ausgebildet ist, um bei einer ersten Potentialdifferenz (U₁) zwischen dem ersten Elektrodenbereich (14₁) und der Gegenelektrode (12) und einer zweiten Potentialdifferenz (U₂) zwischen dem einen zweiten Elektrodenbereich (14₂) und der Gegenelektrode (12) einen Übergangsbereich (44) auszubilden, in welchem die optische Eigenschaft (T) von einem ersten optischen Zustand in einen zweiten optischen Zustand wechselt.

2. Vorrichtung gemäß Anspruch 1, bei der die zusammenhängende Schicht des aktiven Materials (16) eine feste oder hochviskose Schicht ist.

3. Vorrichtung gemäß Anspruch 1 oder 2, bei der die optische Eigenschaft auf einer basierend auf der elektrischen Potentialdifferenz veränderlichen Brechzahl des aktiven Materials basiert, welche eine Absorptionseigenschaft oder eine bereitgestellte Phasenverschiebung umfasst, oder bei der die optische Eigenschaft eine Lichtemission umfasst.

4. Vorrichtung gemäß einem der vorangehenden Ansprüche, bei der das aktive Material (16) mit einer veränderlichen Materialdicke durchgehend über den ersten Elektrodenbereich (14₁), den Zwischenbereich (22) und den zweiten Elektrodenbereich (14₂) angeordnet ist.

5. Vorrichtung gemäß einem der vorangehenden Ansprüche, mit einem Elektrolyten, der zwischen dem aktiven Material (16) und der Gegenelektrode (12) angeordnet ist.

6. Vorrichtung gemäß einem der vorangehenden Ansprüche, bei der das aktive Material (16) ausgebildet ist, um bei einer gleichen ersten elektrischen Potentialdifferenz zwischen dem ersten Elektrodenbereich (14₁) und der Gegenelektrode (12) einerseits und zwischen dem einen zweiten Elektrodenbereich (14₂) und der Gegenelektrode (12) andererseits eine homogene erste optische Eigenschaft über den ersten Teilbereich (18₁), den Zwischenbereich (22) und den zweiten Teilbereich (18₂) hinweg aufzuweisen; und
um bei einer gleichen zweiten elektrischen Potentialdifferenz zwischen dem ersten Elektrodenbereich (14₁) und der Gegenelektrode (12) einerseits und zwischen dem zweiten Elektrodenbereich (14₂) und der Gegenelektrode (12) andererseits eine homogene zweite optische Eigenschaft über den ersten Teilbereich (18₁), den Zwischenbereich (22) und den zweiten Teilbereich (18₂) hinweg aufzuweisen.

7. Vorrichtung gemäß einem der vorangehenden Ansprüche, bei der die Gegenelektrode (12) und/oder die Arbeitselektrode (14) transparent elektrisch leitfähig gebildet ist.

8. Vorrichtung gemäß einem der vorangehenden Ansprüche, die als elektrochrome Iris gebildet ist.

9. Vorrichtung gemäß einem der vorangehenden Ansprüche, bei der an der Gegenelektrode (12) eine erste Schicht aktiven Materials (16₁) und an der Arbeitselektrode eine zweite Schicht aktiven Materials (16₂) angeordnet ist, wobei die erste Schicht aktiven Materials (16₁) und die zweite Schicht aktiven Materials (16₂) durch einen Elektrolyten beabstandet sind.

10. System (80) mit:
einer Vorrichtung (10; 20; 30; 40; 50; 60; 70) gemäß einem der vorangehenden Ansprüche; und
einer Ansteuereinrichtung (48), die konfiguriert ist, um gleichzeitig ein Bezugspotential (Φ₀) an die Gegenelektrode (12) anzulegen, ein bezogen auf das Bezugspotential erstes Potential (Φ₁) an den ersten Elektrodenbereich (14₁) anzulegen und ein bezogen auf das Bezugspotential zweites Potential (Φ₂) an den einen zweiten Elektrodenbereich (14₂) anzulegen.

11. System gemäß Anspruch 10, bei dem die Ansteuereinrichtung (48) ausgebildet ist, um das erste Potential (Φ₁) und das zweite Potential (Φ₂) so anzulegen, dass eine Potentialdifferenz von zumindest -1500 mV und höchstens +1500mV um ein Redoxpotential des aktiven Materials erhalten wird.

12. System gemäß einem der Anspruch 10 oder 11, das als Apodisationsfilter gebildet ist.

13. System gemäß einem der Ansprüche 10 bis 12, bei der die Ansteuereinrichtung ausgebildet ist, um die Vorrichtung als Gradientenfilter zu betreiben.

14. Verfahren zum Bereitstellen einer Vorrichtung zum bereichsweisen Ändern einer optischen Eigenschaft (T) mit folgenden Schritten:
Anordnen eines aktiven Materials (16), zwischen einer Gegenelektrode (12) und einer Arbeitselektrode (14), die eine Strukturierung in zumindest einen ersten Elektrodenbereich (14₁) und einen zweiten Elektrodenbereich (14₂) aufweist, so dass zwischen dem ersten Elektrodenbereich (14₁) und dem zweiten Elektrodenbereich (14₂) ein Zwischenbereich (22) angeordnet ist, so dass das aktive Material (16) zwischen der Gegenelektrode (12) und der Arbeitselektrode (14) angeordnet ist, so dass das aktive Material (16) ausgebildet ist, um basierend auf elektrischen Potentialdifferenzen (U₁, U₂) zwischen der Gegenelektrode (12) und der Arbeitselektrode (14) die optische Eigenschaft (T) zu verändern;
so dass das aktive Material (16) eine zusammenhängende Schicht bildet, die zumindest einen Teilbereich (18₁) des ersten Elektrodenbereichs (14₁) und einen Teilbereich (18₂) des zweiten Elektrodenbereichs (14₂) bedeckt und in dem Zwischenbereich (22) angeordnet ist; und
so dass das aktive Material (16) elektrisch leitfähig und ausgebildet ist, um bei einer ersten Potentialdifferenz (U₁) zwischen dem ersten Elektrodenbereich (14₁) und der Gegenelektrode (12) und einer zweiten Potentialdifferenz (U₂) zwischen dem einen zweiten Elektrodenbereich (14₂) und der Gegenelektrode (12) einen Übergangsbereich (44) auszubilden, in welchem die optische Eigenschaft (T) von einem ersten optischen Zustand in einen zweiten optischen Zustand wechselt.

15. Verfahren nach Anspruch 14, bei dem das aktive Material (16) durch Ausführen eines Druck- oder Rakelverfahrens angeordnet wird.

## Claims

1. Apparatus (10; 20; 30; 40; 50; 60; 70) for regionally changing an optical property (T), comprising:
a counterelectrode (12);
a working electrode (14) comprising a structuring into at least a first electrode region (14₁) and a second electrode region (14₂), wherein an intermediate region (22) is arranged between the first electrode region (14₁) and the second electrode region (14₂);
an active material (16) arranged between the counterelectrode (12) and the working electrode (14) and configured to change the optical property (T) on the basis of an electrical potential difference (U₁, U₂) between the counterelectrode (12) and the working electrode (14);
wherein the active material (16) forms a continuous layer covering at least a partial region (18₁) of the first electrode region (14₁) and a partial region (18₂) of the second electrode region (14₂) and is arranged in the intermediate region (22);
**characterized in that** the active material (16) is electrically conductive and configured to form, upon a first potential difference (U₁) between the first electrode region (14₁) and the counterelectrode (12) and a second potential difference (U₂) between the one second electrode region (14₂) and the counterelectrode (12), a transition region (44) in which the optical property (T) changes from a first optical state into a second optical state.

2. Apparatus according to claim 1, wherein the continuous layer of the active material (16) is a solid or highly viscose layer.

3. Apparatus according to claim 1 or 2, wherein the optical property is based on a refractive index of the active material that is variable on the basis of the electrical potential difference, including an absorption property or a provided phase-shift, or wherein the optical property includes a light emission.

4. Apparatus according to any of the preceding claims, wherein the active material (16) is arranged continuously across the first electrode region (14₁), the intermediate region (22), and the second electrode region (14₂) with a variable material thickness.

5. Apparatus according to any of the preceding claims, comprising an electrolyte arranged between the active material (16) and the counterelectrode (12).

6. Apparatus according to any of the preceding claims, wherein the active material (16) is configured to comprise, upon an identical first electrical potential difference between the first electrode region (14₁) and the counterelectrode (12) on the one hand, and between the one second electrode region (14₂) and the counterelectrode (12) on the other hand, a homogenous first optical property across the first partial region (18₁), the intermediate region (22), and the second partial region (18₂); and
to comprise, upon an identical second electrical potential difference between the first electrode region (14₁) and the counterelectrode (12) on the one hand, and between the second electrode region (14₂) and the counterelectrode (12) on the other hand, a homogenous second optical property across the first partial region (18₁), the intermediate region (22), and the second partial region (18₂).

7. Apparatus according to any of the preceding claims, wherein the counterelectrode (12) and/or the working electrode (14) are formed to be transparently electrically conductive.

8. Apparatus according to any of the preceding claims, formed as an electrochromic iris.

9. Apparatus according to any of the preceding claims, wherein a first layer of active material (16₁) is arranged at the counterelectrode (12), and wherein a second layer of active material (16₂) is arranged at the working electrode, wherein the first layer of active material (16₁) and the second layer of active material (16₂) are spaced apart by an electrolyte.

10. System (80) comprising:
an apparatus (10; 20; 30; 40; 50; 60; 70) according to any of the preceding claims; and
a control unit (48) configured to simultaneously apply a reference potential (Φ₀) to counterelectrode (12), to apply to the first electrode region (14₁) a first potential (Φ₁) with respect to the reference potential, and to apply to the one second electrode region (14₂) a second potential (Φ₂) with respect to the reference potential.

11. System according to claim 10, wherein the control unit (48) is configured to apply the first potential (Φ₁) and the second potential (Φ₂) such that a potential difference of at least -1500mV and up to +1500mV around a redox potential of the active material is obtained.

12. System according to any of claims 10 or 11, configured as an apodization filter.

13. System according to any of claims 10 to 12, wherein the control unit is configured to operate the apparatus as a gradient filter.

14. Method for providing an apparatus for regionally changing an optical property (T), comprising;
arranging an active material (16) between a counterelectrode (12) and a working electrode (14) comprising a structuring into at least a first electrode region (14₁) and a second electrode region (14₂) so that an intermediate region (22) is arranged between the first electrode region (14₁) and the second electrode region (14₂), so that the active material (16) is arranged between the counterelectrode (12) and the working electrode (14), so that the active material (16) is configured to change the optical property (T) on the basis of electrical potential differences (U₁, U₂) between the counterelectrode (12) and the working electrode (14);
so that the active material (16) forms a continuous layer covering at least a partial region (18₁) of the first electrode region (14₁) and a partial region (18₂) of the second electrode region (14₂) and is arranged in the intermediate region (22);
so that the active material (16) is electrically conductive and configured to form, upon a first potential difference (U₁) between the first electrode region (14₁) and the counterelectrode (12) and a second potential difference (U₂) between the one second electrode region (14₂) and the counterelectrode (12), a transition region (44) in which the optical property (T) changes from a first optical state into a second optical state.

15. Method according to claim 14, wherein the active material (16) is arranged by performing a printing or doctoring method.

## Revendications

1. Dispositif (10; 20; 30; 40; 50; 60; 70) pour la modification par zone d'une propriété optique (T), avec:
une contre-électrode (12);
une électrode de travail (14) qui présente une structuration dans au moins une première zone d'électrode (14i) et une deuxième zone d'électrode (14₂), où entre la première zone d'électrode (14₁) et la deuxième zone d'électrode (14₂) est disposée une zone intermédiaire (22);
un matériau actif (16) qui est disposé entre la contre-électrode (12) et l'électrode de travail (14), et qui est conçu pour modifier, sur base d'une différence de potentiel électrique (U₁, U₂) entre la contre-électrode (12) et l'électrode de travail (14), la propriété optique (T);
dans lequel le matériau actif (16) forme une couche cohérente qui recouvre au moins une zone partielle (18₁) de la première zone d'électrode (14₁) et une zone partielle (18₂) de la deuxième zone d'électrode (14₂) et qui est située dans la zone intermédiaire (22);
**caractérisé par le fait que** le matériau actif (16) est électriquement conducteur et est conçu pour former, à une première différence de potentiel (U₁) entre la première zone d'électrode (14₁) et la contre-électrode (12) et à une deuxième différence de potentiel (U₂) entre la deuxième électrode (14₂) et la contre-électrode (12), une zone de transition (44) dans laquelle la propriété optique (T) varie d'un premier état optique à un deuxième état optique.

2. Dispositif selon la revendication 1, dans lequel la couche cohérente du matériau actif (16) est une couche solide ou hautement visqueuse.

3. Dispositif selon la revendication 1 ou 2, dans lequel la propriété optique est basée sur un indice de réfraction du matériau actif qui varie sur base de la différence de potentiel électrique, qui comporte une propriété d'absorption ou un déphasage créé, ou dans lequel la propriété optique comporte une émission de lumière.

4. Dispositif selon l'une des revendications précédentes, dans lequel le matériau actif (16) est disposé avec une épaisseur de matériau variable en continu sur la première zone d'électrode (14₁), la zone intermédiaire (22) et la deuxième zone d'électrode (14₂).

5. Dispositif selon l'une des revendications précédentes, avec un électrolyte qui est disposé entre le matériau actif (16) et la contre-électrode (12).

6. Dispositif selon l'une des revendications précédentes, dans lequel le matériau actif (16) est conçu pour présenter, à une même première différence de potentiel électrique entre la première zone d'électrode (14i) et la contre-électrode (12), d'une part, et entre la deuxième zone d'électrode (14₂) et la contre-électrode (12), d'autre part, une première propriété optique homogène sur la première zone partielle (18i), la zone intermédiaire (22) et la deuxième zone partielle (18₂); et
pour présenter, à une même deuxième différence de potentiel électrique entre la première zone d'électrode (14i) et la contre-électrode (12), d'une part, et entre la deuxième zone d'électrode (14₂) et la contre-électrode (12), d'autre part, une deuxième propriété optique homogène sur la première zone partielle (18₁), la zone intermédiaire (22) et la deuxième zone partielle (18₂).

7. Dispositif selon l'une des revendications précédentes, dans lequel la contre-électrode (12) et/ou l'électrode de travail (14) est conçue de manière transparente et électriquement conductrice.

8. Dispositif selon l'une des revendications précédentes, qui est formé comme un iris électro-chromique.

9. Dispositif selon l'une des revendications précédentes, dans lequel est disposée, sur la contre-électrode (12), une première couche de matériau actif (16₁) et est disposée, sur l'électrode de travail, une deuxième couche de matériau actif (16₂), dans lequel la première couche de matériau actif (16₁) et la deuxième couche de matériau actif (16₂) sont espacées l'une de l'autre par un électrolyte.

10. Système (80) avec:
un dispositif (10; 20; 30; 40; 50; 60; 70) selon l'une des revendications précédentes; et
un dispositif de commande (48) qui est configuré pour simultanément appliquer un potentiel de référence (*φ*₀) à la contre-électrode (12), appliquer un premier potentiel (*φ*₁) par rapport au potentiel de référence à la première zone d'électrode (14₁) et appliquer un deuxième potentiel (*φ*₂) par rapport au potentiel de référence à la deuxième zone d'électrode (14₂).

11. Système selon la revendication 10, dans lequel le dispositif de commande (48) est conçu pour appliquer le premier potentiel (*φ*₁) et le deuxième (*φ*₂) de sorte que soit obtenue une différence de potentiel d'au moins -1500 mV et de tout au plus +1500 mV autour d'un potentiel redox du matériau actif.

12. Système selon l'une des revendications 10 ou 11, qui est réalisé sous forme de filtre d'apodisation.

13. Système selon l'une des revendications 10 à 12, dans lequel le dispositif de commande est conçu pour faire fonctionner le dispositif comme filtre à gradient.

14. Procédé pour préparer un dispositif pour modifier par zone une propriété optique (T), aux étapes suivantes consistant à:
disposer un matériau actif (16) entre une contre-électrode (12) et une électrode de travail (14) qui présente une structuration dans au moins une première zone d'électrode (14₁) et une deuxième zone d'électrode (14₂), de sorte que soit disposée, entre la première zone d'électrode (14i) et la deuxième zone d'électrode (14₂), une zone intermédiaire (22), de sorte que le matériau actif (16) soit disposé entre la contre-électrode (12) et l'électrode de travail (14), de sorte que le matériau actif (16) soit conçu pour modifier, sur base des différences de potentiel électrique (U₁, U₂) entre la contre-électrode (12) et l'électrode de travail (14), la propriété optique (T);
de sorte que le matériau actif (16) forme une couche cohérente qui recouvre au moins une zone partielle (18₁) de la première zone d'électrode (14₁) et une zone partielle (18₂) de la deuxième zone d'électrode (14₂) et qui est disposée dans la zone intermédiaire (22); et
de sorte que le matériau actif (16) soit électriquement conducteur et soit conçu pour former, à une première différence de potentiel (Ui) entre la première zone d'électrode (14i) et la contre-électrode (12) et à une deuxième différence de potentiel (U₂) entre la deuxième zone d'électrode (14₂) et la contre-électrode (12), une zone de transition (44) dans laquelle la propriété optique (T) varie d'un premier état optique à un deuxième état optique.

15. Procédé selon la revendication 14, dans lequel le matériau actif (16) est disposé en réalisant un procédé d'impression ou de raclage.
